(19) **Europäisches Patentamt / European Patent Office / Office européen des brevets**

(11) **EP 4 776 530 A1**

(12) **EUROPEAN PATENT APPLICATION**

(43) Date of publication:
15.07.2026 Bulletin 2026/29

(21) Application number: 26151105.9

(22) Date of filing: 09.01.2026

(51) International Patent Classification (IPC):
*H04B 10/61* $^{(2013.01)}$

(52) Cooperative Patent Classification (CPC):
H04B 10/6161; H04B 10/6163; H04B 10/6165

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.01.2025 US 202519014723
16.01.2025 US 202563745833 P
15.04.2025 US 202519179118
23.07.2025 US 202519277767

(71) Applicant: Ciena Corporation
Hanover, MD 21076 (US)

(72) Inventors:
• GHARAN, Shahab Oveis
Ottawa (CA)
• HARLEY, James S.
Richmond (CA)
• REIMER, Michael
Stittsville (CA)
• ROBERTS, Kim Byron
Ottawa (CA)
• BERGEN, Mary Henry
Ottawa (CA)

(74) Representative: Dehns
10 Old Bailey
London EC4M 7NG (GB)

(54) **SYSTEMS AND METHODS FOR EQUALIZATION ENHANCED PHASE NOISE (EEPN) TRACKING AND COMPENSATION**

(57) Aspects of the subject disclosure may include, for example, generating, by a processing system including a processor, an error estimate based on information from a carrier phase recovery system that digitally recovers a carrier phase associated with a signal, deriving, by the processing system, filter coefficients based on the error estimate, and using, by the processing system, the filter coefficients to perform EEPN compensation relating to the signal, wherein a correlation time of at least one of the filter coefficients is substantially equal to a relative delay associated with digital compensation of chromatic dispersion relating to the signal. Other embodiments are disclosed.

FIG. 1A

**Description**

## CROSS-REFERENCE TO RELATED APPLICATIONS

The present application claims priority to U.S. Appl. Ser. No. 19/014,723 (filed on January 9, 2025). The present application also claims priority to U.S. Appl. Ser. No. 19/179,118 (filed on April 15, 2025) and U.S. Appl. Ser. No. 19/277,767 (filed on July 23, 2025), each of which claims the benefit of and priority to U.S. Provisional Ser. No. 63/745,833 (filed on January 16, 2025).

## FIELD OF THE DISCLOSURE

The subject disclosure relates to systems and methods for equalization enhanced phase noise (EEPN) tracking and compensation. The subject disclosure also relates to systems and methods for time domain equalization EEPN tracking and compensation. The subject disclosure also relates to systems and methods for improved tolerance to linear and nonlinear impairments, including residual phase noise as well as impairments induced by high-power optical service channels (OSCs).

## BACKGROUND

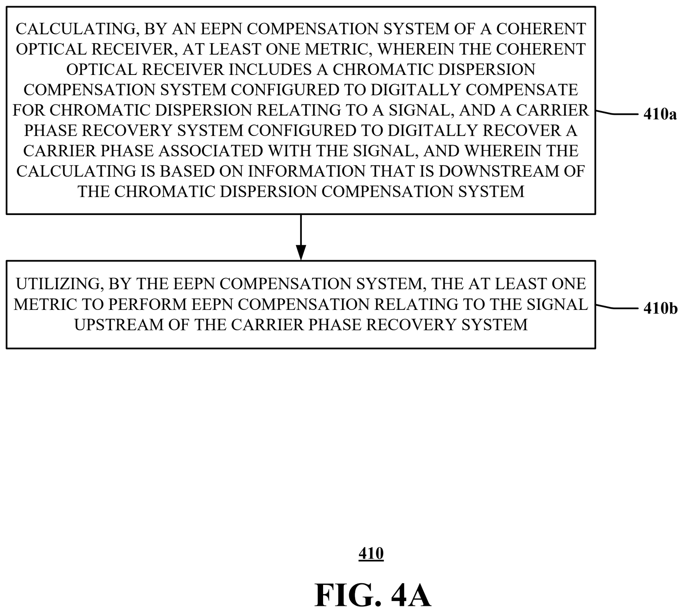

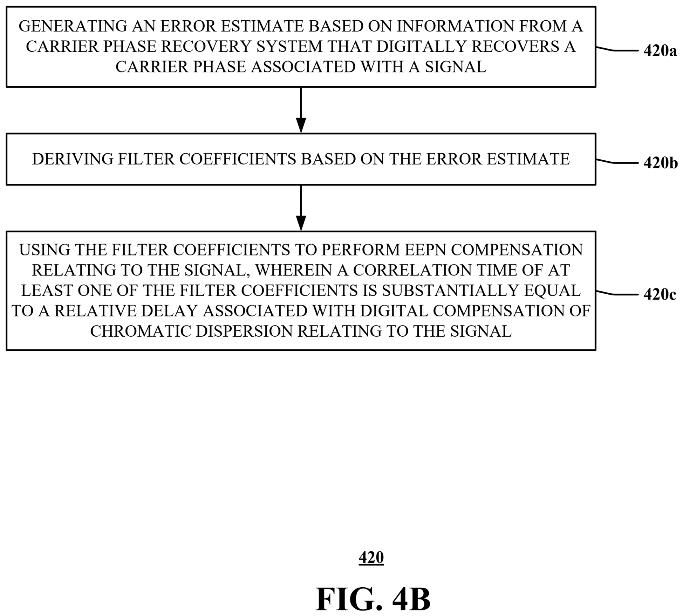

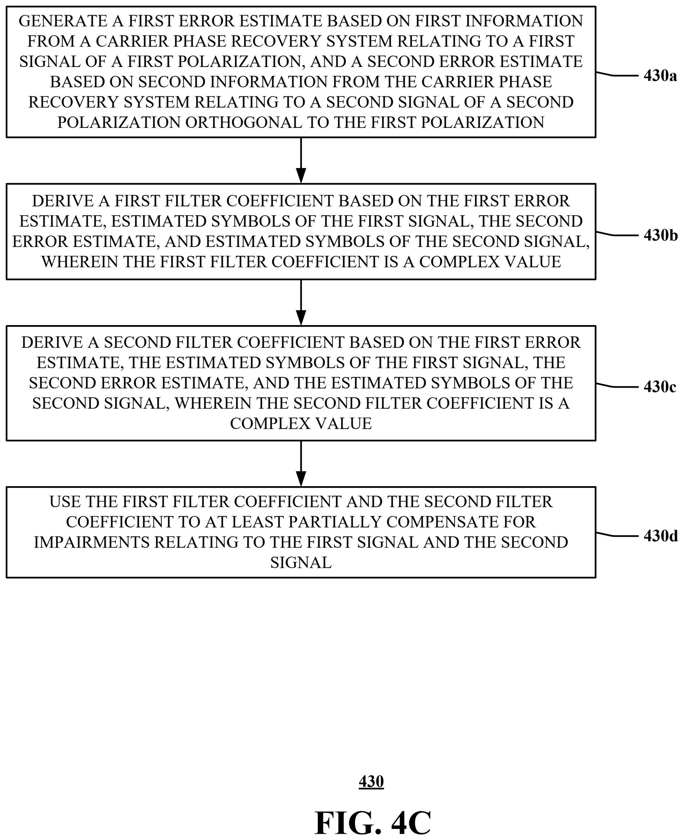

In a coherent optical communication system that performs digital compensation of chromatic dispersion experienced by optical signals in a fiber, the received effect of phase noises of the transmitter (Tx) laser and the receiver (Rx) (or local oscillator (LO)) laser are smeared out in time as equalization enhanced phase noise (EEPN). This makes accurate carrier phase tracking challenging especially when there are large amounts of chromatic dispersion and phase noise. A. Kakkar et al., "Comprehensive Study of Equalization-Enhanced Phase Noise in Coherent Optical Systems," in Journal of Lightwave Technology, vol. 33, no. 23, pp. 4834-4841, December 1, 2015 (which is incorporated by reference herein in its entirety), describes this EEPN effect in detail. Figure 12 of E. Ip and J. M. Kahn, "Fiber Impairment Compensation Using Coherent Detection and Digital Signal Processing," in Journal of Lightwave Technology, vol. 28, no. 4, pp. 502-519, 2010 (which is incorporated by reference herein in its entirety), illustrates the ideal compensation for Rx laser phase noise prior to Rx dispersion compensation and the ideal compensation for Tx laser phase noise after the Rx dispersion compensation. A. Abolfathimomtaz et al., "Equalization-Enhanced Phase Noise Compensation in Coherent Fiber Receivers," in Journal of Lightwave Technology, vol. 42, no. 20, pp. 7155-7166, October 15, 2024 (hereafter "Abolfathimomtaz" and which is incorporated by reference herein in its entirety), describes a technique in which Rx laser EEPN that results from Rx dispersion compensation is compensated for based on an estimate of the Rx laser phase noise. Figure 4 of Abolfathimomtaz illustrates that the EEPN compensation technique is implemented in parallel with carrier phase recovery. Carrier phase recovery (also known simply as carrier recovery) is the detection and adjustment of the effect of the phase of the optical carrier. Differences in frequency and phase between the Tx laser and the Rx laser contribute variations to this phase. Abolfathimomtaz also describes a method involving the use of a pilot signal to perform EEPN compensation downstream of carrier phase recovery. Co-pending U.S. Patent Application No. 18/474,495, entitled "Integrated Optical Frequency Discriminator," filed on September 26, 2023, and which is incorporated by reference herein in its entirety, describes the use of a metric to compensate for Rx laser EEPN, prior to performing Rx digital chromatic dispersion compensation.

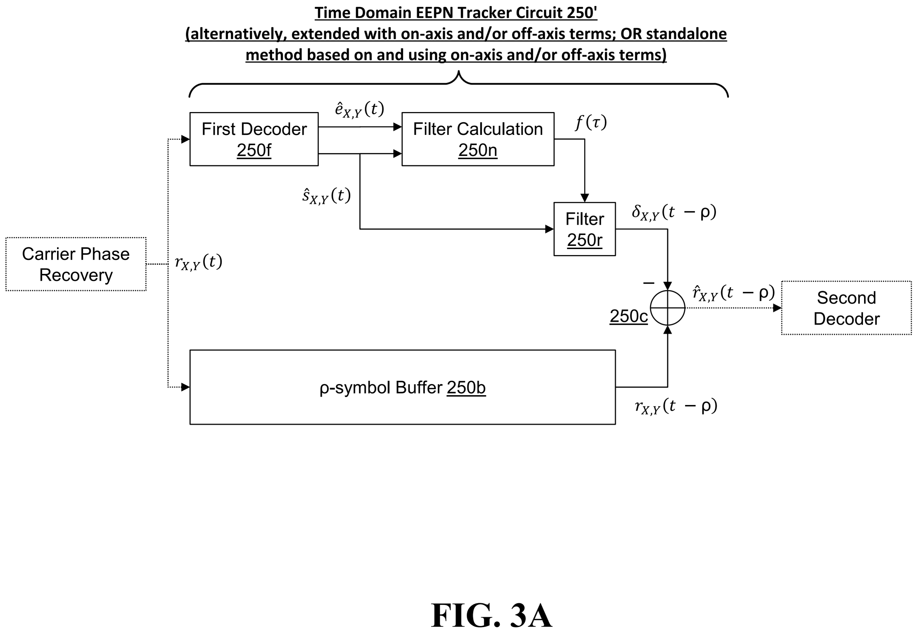

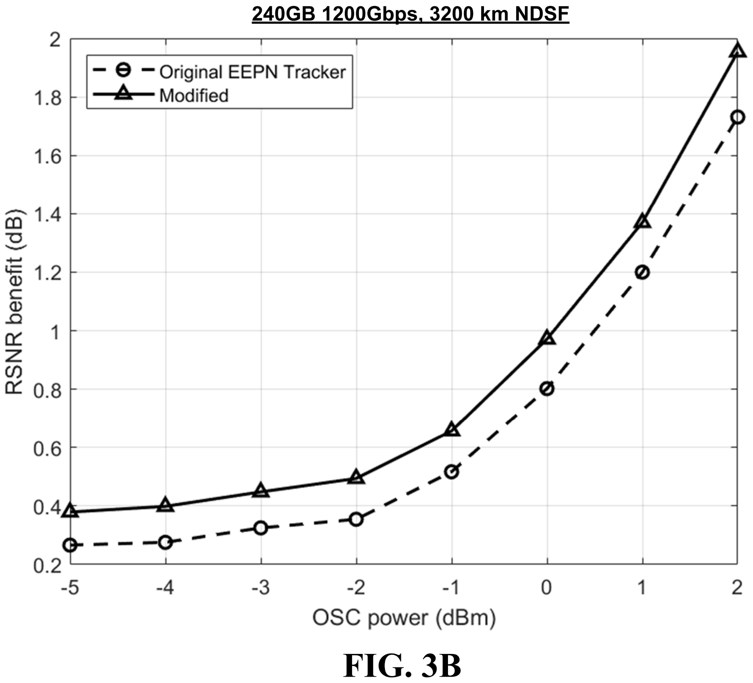

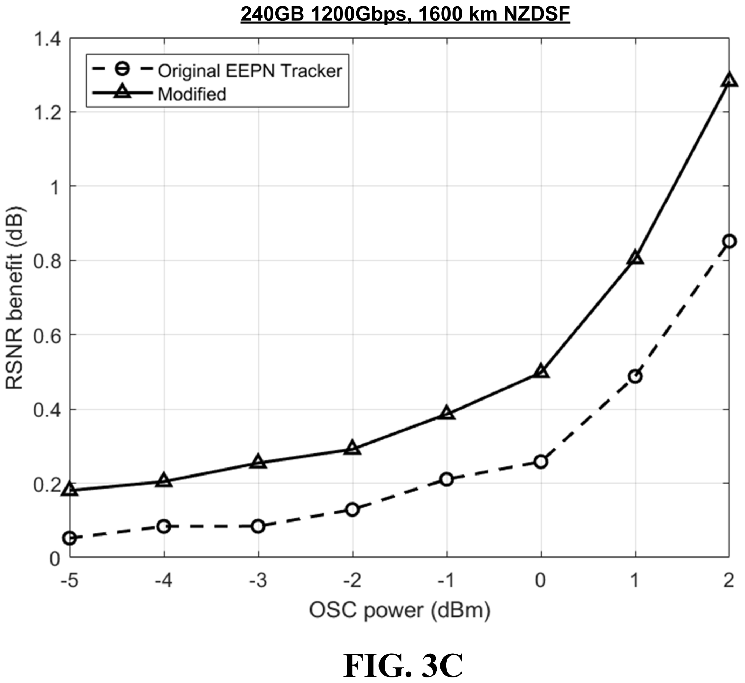

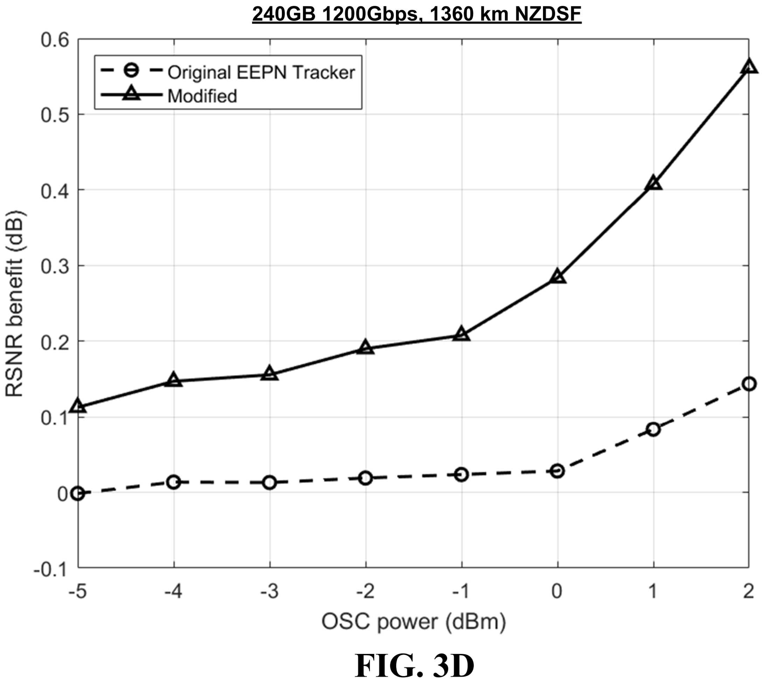

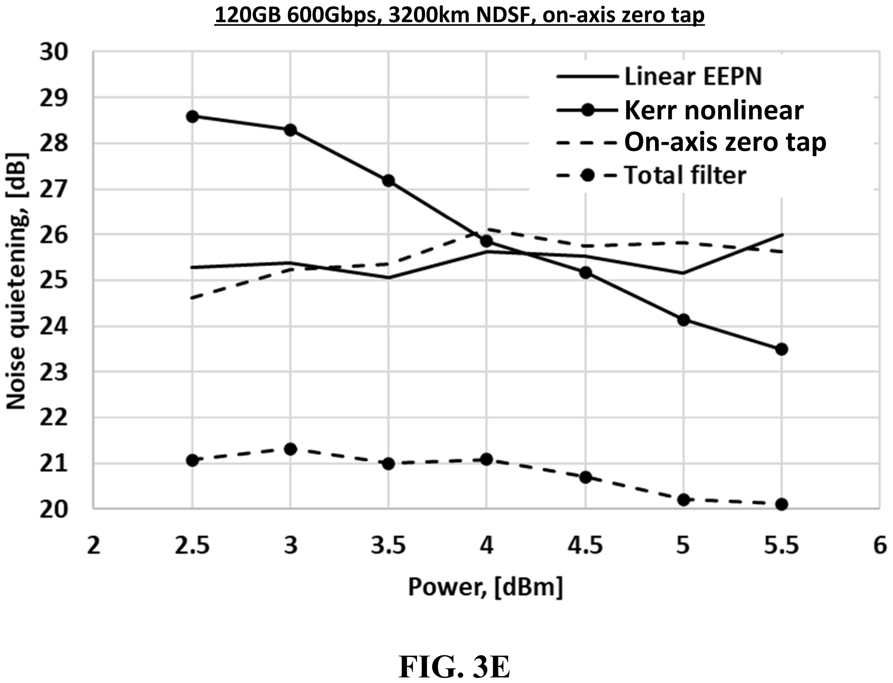

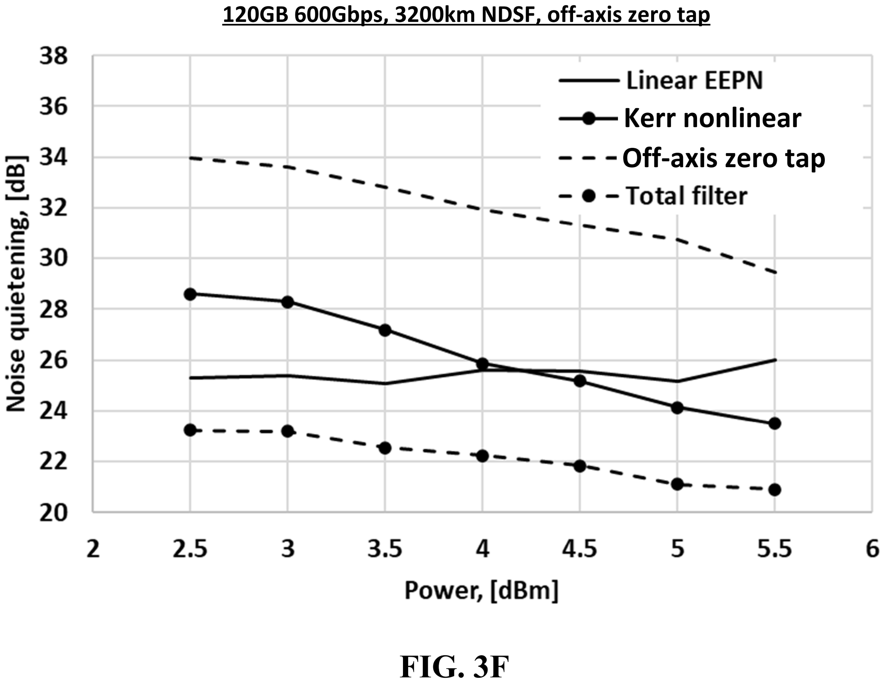

Of course, typical coherent transmission systems use both Tx and Rx digital chromatic dispersion compensation, and thus, while the Rx compensation interacts with the Rx laser phase noise to create Rx laser EEPN, the Tx compensation also interacts with the Tx laser phase noise to create Tx laser EEPN. M. S. Neves et al., "Enhanced Phase Estimation for Long-Haul Multi-Carrier Systems Using a Dual-Reference Subcarrier Approach," in Journal of Lightwave Technology, vol. 39, no. 9, pp. 2714-2724, May 1, 2021 (which is incorporated by reference herein in its entirety), describes a technique in which two subcarriers carry known pilot information that is used to estimate the Rx laser phase noise. K. Roberts *et al.* U.S. Patent No. 7,200,339 (which is incorporated by reference herein in its entirety) describes methods for reducing the phase noise of a laser. This reduces the effects of EEPN, albeit at higher cost. G. Jacobsen et al., "Study of EEPN mitigation using modified RF pilot and Viterbi-Viterbi based phase noise compensation," in Optics Express, 2013 (which is incorporated by reference herein in its entirety), describes using polarization redundancy to enable EEPN compensation in the receiver, at the cost of halving the spectral efficiency. Sun *et al.* U.S. Patent No. 7,627,252 (which is incorporated by reference herein in its entirety) describes a technique in which clock phase is detected from an optical signal with dispersion impairments. Clock phase is the sampling time relative to the symbol location in time, and is usually considered in radians or unit intervals. The error in the sampling time is referred to as jitter. Wu *et al.* U.S. Patent No. 7,606,498 (which is incorporated by reference herein in its entirety) describes examples of carrier recovery in a coherent system. Oveis Gharan *et al.* U.S. Patent No. 11,126,219 (which is incorporated by reference herein in its entirety) describes edgeless clock phase detection using interior spectral components. X. Zhou, "Efficient Clock and Carrier Recovery Algorithms for Single-Carrier Coherent Optical Systems: A systematic review on challenges and recent progress," in IEEE Signal Processing Magazine, vol. 31, no. 2, pp. 35-45, March 2014 (which is incorporated by reference herein in its entirety), discusses examples of other methods of clock phase detection. Oveis Gharan *et al.* U.S. Patent No. 11,038,599 (hereafter "the '599 patent"), which is incorporated by reference herein in its entirety, discloses a first decoding of a first filtered signal 308, and a second filter followed by a second decoding. Referring to Figure 3 of the '599 patent, the input 316 to the second filter is an error signal, where the second coefficient calculation estimates coefficients by exploiting correlations in additive noise in the first filtered signal 308, to reduce or minimize the variance of that additive noise. M. Qiu et al., "Mitigation of Equalization Enhanced Phase Noise Using Feed-forward Timing Error Correction, ECOC 2024 (hereafter "Qiu" and which is incorporated by reference herein in its entirety), describes feed-forward clock recovery, which provides minimal EEPN compensation. A small portion of the EEPN effect instantiates as common clock jitter and so can be tracked by clock recovery algorithms such as that used by Qiu. Another portion instantiates as common carrier phase noise and so can be tracked by carrier phase recovery algorithms. The EEPN issue and the EEPN mitigation described herein refer to the rest of the EEPN that is not common to the whole signal and so cannot be mitigated by those algorithms. It is common practice to include pilot, sync, framing, training, or other known values at known locations in a transmitted symbol stream to facilitate error detection and correction, clock phase detection, carrier phase recovery, etc. There remains a need, however, for low cost and low heat methods for substantially mitigating Tx and/or Rx EEPN. Low power methods generally do not compensate for both Tx and Rx EEPN. Low power systems generally do not have Tx chromatic dispersion compensation and so do not suffer from Tx EEPN.

S. Jung et al., "Mitigating Equalization-Enhanced Phase Noise Using Adaptive Post Equalization, ECOC 2024 (which is incorporated by reference herein in its entirety), describes a Least Mean Square (LMS) filter after carrier phase recovery. However, LMS is inherently slow due to the use of slowly varying coefficients, and thus does not work very well against EEPN. T. Williams, "1600ZR+ EEPN Considerations," OIF November 5-7, 2024 (which is incorporated by reference herein in its entirety), discusses the use of stochastic gradient descent, which is merely LMS feedback. Decision-feedback is a well-known method of signal equalization. See, e.g., C. A. Belfiore and J. H. Park, "Decision feedback equalization," in Proceedings of the IEEE, vol. 67, no. 8, pp. 1143-1156, August 1979 (which is incorporated by reference herein in its entirety). Feed-forward filtering in general is also a well-known method. See, e.g., Elliott, Stephen J. and Trevor J. Sutton, "Performance of feedforward and feedback systems for active control," in IEEE Transactions on Speech and Audio Processing 4.3 (1996): 214-223 (which is incorporated by reference herein in its entirety). There remains a need for low cost and low heat methods for substantially mitigating Tx and/or Rx EEPN.

Optical Service Channels (OSCs) are typically low data rate, intensitymodulated channels that are used for network management and control in optical communication systems. These channels often operate at data rates, such as 155 megabits per second (Mbps) or 1.25 gigabits per second (Gbps), and are positioned at specific wavelengths that are outside of the primary data transmission bands so as to minimize interference with wavelength-division multiplexed (WDM) channels.

In conventional systems, OSCs are generally operated at low optical power levels, such as less than or equal to -5 decibel-milliwatts (dBm), to reduce nonlinear interactions with neighboring WDM channels. These nonlinear interactions include crossphase modulation (XPM) and cross-polarization modulation (XPolM), which can degrade the performance of WDM channels by introducing phase and polarization distortions. XPM occurs when two or more optical signals, typically at different wavelengths, interact with each other through the fiber's nonlinearity, and causes the phase of one signal to be modulated by the intensity of the other signal(s), leading to signal distortions and impairments in WDM systems. XPolM is similar to XPM but specifically refers to the nonlinear interaction between signals in different polarization states. XPolM causes the polarization state of one signal to be modulated by the intensity of another signal, resulting in polarization crosstalk and signal degradation in polarization-multiplexed systems.

In certain optical line systems, OSCs have been observed to operate at significantly higher optical power levels, such as 0 dBm or higher, with some reaching up to approximately 2 dBm. Additionally, these high-power OSCs may be positioned at wavelengths that are closer to the conventional band (C-band), such as at or below 1516 nanometers (nm). The combination of high power and low data rates in these OSCs exacerbates nonlinear effects, including XPM and XPolM, which can adversely impact WDM channels within the C-band. The nonlinear interference caused by these high-power OSCs is further complicated by its broad bandwidth, which can exceed the tracking capabilities of conventional digital signal processing (DSP) systems in optical receivers. This creates challenges in mitigating the impact of such interference on the performance of WDM systems.

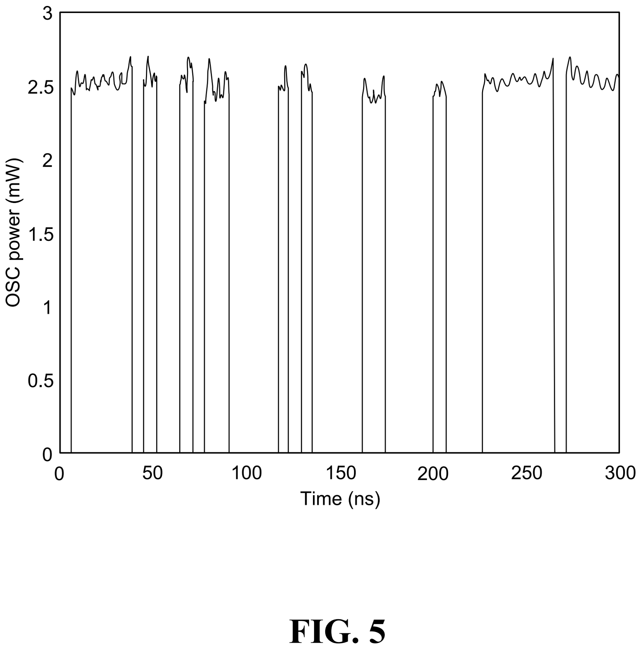

FIG. 5 illustrates an example of the optical power versus time for a 155 Mbps OSC operating at +1 dBm average optical power (approximately 1.26 milliwatts). Due to the low data rate, the nonlinear interference caused by XPM and XPolM closely follows the on-off-keyed data pattern of the OSC. The rapid changes in optical power during 0→1 or 1→0 bit transitions result in abrupt variations in nonlinear interference, which are challenging for a conventional receiver's DSP system to track effectively. Additionally, the peak power of the OSC is twice its average optical power due to the on-off-keying modulation format.

The following is a brief description of existing techniques for addressing the impact of high-power OSCs, along with their drawbacks.

- Increasing wavelength separation or reducing the power of the OSC: These techniques can mitigate the XPM and XPolM effects on neighboring WDM channels. However, reducing OSC power is often impractical since deployed systems have numerous OSCs that need to be manually adjusted, thus requiring significant craft intervention and cost. Typically, these OSCs also require relatively high optical power to operate correctly, and so XPM/XPolM effects remain a concern. Additionally, increasing wavelength separation between the OSC and the neighboring channel is limited by the optical loss and waveguiding properties of the fiber outside of the C-band.
- Utilizing coherent quadrature phase-shift keying (QPSK) or 8-dimensional (8D) polarization-balanced OSC channels: These modulation formats can suppress XPM and XPolM by eliminating the optical power fluctuations that are inherent in on-off-keying modulation. However, retrofitting existing line systems to support coherent OSCs is cost-prohibitive, making this solution impractical for many deployments.
- Expanding the tracking bandwidth of carrier recovery: Increasing the tracking bandwidth can moderately reduce XPM interference caused by the OSC. However, this approach can introduce penalties in certain applications, such as increased noise sensitivity or degraded performance in scenarios with high dispersion or other impairments. Also, the bandwidth of OSC-induced XPolM is high enough that it cannot be tracked by least mean squares (LMS) algorithms.

L. Li, et. al, "Nonlinear polarization crosstalk canceller for dual-polarization digital coherent receivers", in proc. OFC 2010, OWE3 (2010) (hereafter "Li", and which is incorporated by reference herein in its entirety), describe a method for compensating nonlinear XPolM. Li describes a set of $2 \times 2$ filter coefficients that are applied to the received symbols:

$$\begin{pmatrix} r'_X(k) \\ r'_Y(k) \end{pmatrix} = \sum_{l=-L}^{L} \begin{pmatrix} \sqrt{1 - |A(l)|^2} & A(l) \\ B(l) & \sqrt{1 - |B(l)|^2} \end{pmatrix} \begin{pmatrix} r_X(k - l) \\ r_Y(k - l) \end{pmatrix}$$

where $A(l)$ and $B(l)$ are estimated based on the received symbols after carrier recovery. There are several drawbacks to Li's proposed canceller. First, Li discusses the use of numerous coefficients, L > 10, which is expensive for DSP implementation. Additionally, the on-axis coefficients, $\sqrt{1 - |A(l)|^2}$ and $\sqrt{1 - |B(l)|^2}$ are also strictly real-valued, which does not allow for the compensation of residual phase noise.

## BRIEF DESCRIPTION OF THE DRAWINGS

Reference will now be made to the accompanying drawings, which are not necessarily drawn to scale, and wherein:

FIG. 1A is a diagram of a non-limiting example of a communication network in accordance with various aspects described herein.

FIG. 1B is a block diagram of an example, non-limiting embodiment of a transmitter/modulator system in accordance with various aspects described herein.

FIG. 1C is a block diagram of an example, non-limiting embodiment of a receiver device in accordance with various aspects described herein.

FIG. 2 is a high-level block diagram illustrating an example location of an EEPN tracker/compensator algorithm in the signal flow relative to other digital processing blocks in a receiver, in accordance with various aspects described herein.

FIG. 3A is a high-level block diagram of an example time domain EEPN tracker circuit, in accordance with various aspects described herein.

FIGs. 3B to 3D each shows a comparison of the performance of an example optical communication system using the EEPN tracker algorithm alone versus with the addition of on-axis and off-axis contribution terms, over a given length/type of fiber.

FIG. 3E shows nonlinear propagation simulation results for a high net dispersion system that includes 3200 km (40 spans) of NDSF fiber.

FIG. 3F shows additional nonlinear propagation simulation results for a high net dispersion system that includes 3200 km (40 spans) of NDSF fiber.

FIG. 4A depicts an illustrative embodiment of a method in accordance with various aspects described herein.

FIG. 4B depicts an illustrative embodiment of another method in accordance with various aspects described herein.

FIG. 4C depicts an illustrative embodiment of yet another method in accordance with various aspects described herein.

**FIG. 5** illustrates an example of the optical power versus time for a 155 Mbps OSC operating at +1 dBm average optical power (approximately 1.26 milliwatts).

## DETAILED DESCRIPTION

The subject disclosure describes illustrative embodiments of an efficient method of compensating for EEPN in a coherent optical receiver. In various embodiments, the method may provide for Rx EEPN tracking by leveraging data relating to clock phase detection (or clock recovery) operations in the receiver. For best performance, there would ideally be chromatic dispersion compensation in both the Tx and the Rx. However, in certain applications, such as in low heat devices or plugs (e.g., pluggable optics), it might be more cost efficient to implement chromatic dispersion compensation only in the receiver and simply accept the performance trade-off. Where chromatic dispersion compensation is additionally implemented in the Tx, the Rx EEPN tracking method may simply not address the Tx EEPN.

In one or more embodiments, the Rx EEPN tracking method may include estimating a clock phase metric $\phi_G(b)$ in the frequency domain, downstream of the Rx chromatic dispersion compensation. Rx laser frequency noise $\hat{v}_{Rx}(b)$ may be estimated from the clock phase metric using a filter-i.e., an autoregressive moving average (ARMA) filter defined as, e.g.:

$$\hat{v}_{Rx}(b) := \sum_{m=-M}^{M} h_n(m) \cdot \phi_G\left(b - \frac{\Delta}{2} - m\right) + \sum_{q=-Q}^{Q} h_d(q) \cdot \hat{v}_{Rx}(b - \Delta - q)$$

The EEPN correction phase term for each frequency bin f may be calculated, e.g., as follows:

- 

$$\text{If } \lfloor d(f) \rfloor - \frac{\Delta}{2} + M > D_{MAX} \quad THEN \, d(f) := D_{MAX}$$

- 

$$\forall f | -\frac{F_s}{2}(1 + \alpha) \leq f \leq \frac{F_s}{2}(1 + \alpha): \quad \theta_b(f) := \left(\sum_{c=0}^{\lfloor d(f) \rfloor - 1} v_{Rx}(b + c)\right) +$$

$$v_{Rx}(b + \lfloor d(f) \rfloor) \cdot (d(f) - \lfloor d(f) \rfloor)$$

where the EEPN correction may be applied, e.g., as follows for each frequency bin f upstream of carrier phase recovery:

$$\hat{r}_b(f) := r_b(f) \cdot e^{-j\theta_b(f)}$$

In this way, a clock phase detector metric can be utilized to detect the EEPN that results when the Rx laser phase noise is smeared out in time due to Rx chromatic dispersion compensation, and be used to correct the relative phase error before the carrier phase recovery process corrects the mean phase error.

$D_{MAX}$ above denotes the delay-match buffer size in terms of number of Fast Fourier Transform (FFT) blocks $b$. That is, $D_{MAX}$ determines the extent to which content in future FFT blocks b can be used to provide EEPN correction of a current FFT block. Note that the true number of non-causal taps is equal to $\lfloor d(f) \rfloor - \frac{\Delta}{2} + M$, since the calculation of Rx laser frequency noise $\hat{v}_{Rx}(b)$ involves a strictly causal ARMA filter that uses clock phase outputs of $\hat{v}_{Rx}\left(b - \frac{\Delta}{2} + M\right)$.

Various terms in the foregoing equations are defined further below in a brief description of the derivation of the Rx EEPN tracking algorithm.

Given that the main processing in the Rx EEPN tracking algorithm involves the calculation of a finite impulse response (FIR) filter $h[b]$ that is applied once every FFT block, one skilled in the art would appreciate that this involves fewer calculations than that required by existing or conventional EEPN compensation methods, and thus is advantageously low heat. Embodiments of the Rx EEPN tracking method provide for robustness even against a large amount of Rx laser phase noise in the presence of a large amount of optical channel chromatic dispersion, which enables faster acquisition (i.e., handshaking, error mitigation, and overall laser centering between the Tx and the Rx) and reduces overall system cost.

Systems that run at high speeds (e.g., transmit data at terabits per second (Tb/s) and symbols at hundreds of Gigabaud), use Zero Dispersion Shifted Range (ZR) or ZR+, have narrow linewidth lasers (e.g., 150 kiloHertz (KHz)), and tolerate, for instance, <= 20 nanoseconds (ns) / nanometer (nm) channel chromatic dispersion, can benefit from the use of this method.

The subject disclosure also describes illustrative embodiments of an edgeless EEPN tracking method in which complex metrics relating to edgeless clock recovery are utilized to determine phase correction terms for Tx EEPN and Rx EEPN compensation. "Edgeless" refers to a signal's spectrum in the frequency domain (rather than to transitions in the time domain) in which there are little to no transitions at the edges of the spectrum (i.e., roll-off of about 0).

In one or more embodiments, the edgeless EEPN tracking method may include obtaining complex metrics $m_+[b]$ and $m_-[b]$ for the positive and negative spectrum halves of a signal that are typically used in edgeless clock recovery, e.g.:

$$m_+[b] := \sum_{f=0}^{\frac{F_s}{2}} s^H[f] \cdot r_b[f]$$

$$m_-[b] := \sum_{f=-\frac{F_s}{2}}^{0} s^H[f] \cdot r_b[f]$$

However, rather than conjugate-multiplying the two complex metrics (as is usually done for edgeless clock phase estimation), individual phase estimates $\phi_+[b]$ and $\phi_-[b]$ may be obtained for the positive and negative halves of the spectrum, e.g.:

$$\phi_+[b] := \mathrm{Angle}(m_+[b])$$

$$\phi_-[b] := \mathrm{Angle}(m_-[b])$$

Tx and Rx laser phase noise may then be de-coupled via a proper mixing of $\phi_+[b]$ and $\phi_-[b]$, e.g.:

$$\phi_T(b) := \phi_+(b + \tau_R) - \phi_-(b - \tau_R)$$

$$\phi_R(b) := \phi_-(b + \tau_T) - \phi_+(b - \tau_T)$$

such that $\phi_T(b)$ is expected to have no Rx laser phase noise contribution, and $\phi_R(b)$ is expected to have no Tx laser phase noise contribution. Tx and Rx laser frequency noise values $\hat{v}_{Tx}(t)$ and $\hat{v}_{Rx}(t)$ may be estimated using a Wiener filter solution for minimum mean square error (MMSE), e.g.:

$$h_{Tx}(t) := \left( Toeplitz\left( R_{\phi_T}(t) \right) \right)^{-1} \cdot R_{\phi_T, v_{Tx}}(t)$$

$$h_{Rx}(t) := \left( Toeplitz\left( R_{\phi_R}(t) \right) \right)^{-1} \cdot R_{\phi_R, v_{Rx}}(t)$$

$$\hat{v}_{Tx}(t) := h_{Tx}(t) * \phi_T(t)$$

$$\hat{v}_{Rx}(t) := h_{Rx}(t) * \phi_R(t)$$

Tx and Rx laser phase walk-off correction terms $\psi_{Tx,b}(f)$ and $\psi_{Rx,b}(f)$ may then be calculated for each frequency bin f, e.g., as follows:

$$\forall f \,||f| \leq \frac{F_s}{2}: \psi_{Tx,b}(f) = \hat{v}_{Tx}(b + \lfloor o_T(f) \rfloor) \cdot (o_T(f) - \lfloor o_T(f) \rfloor) + \sum_{c=0}^{\lfloor o_T(f) \rfloor - 1} \hat{v}_{Tx}(b + c)$$

$$\forall f \,||f| \leq \frac{F_s}{2}: \psi_{Rx,b}(f) = \hat{v}_{Rx}(b + \lfloor o_R(f) \rfloor) \cdot (o_R(f) - \lfloor o_R(f) \rfloor) + \sum_{c=0}^{\lfloor o_R(f) \rfloor - 1} \hat{v}_{Rx}(b + c)$$

where

$$o_T(f) := \frac{4 \cdot f \cdot \tau_T}{F_s}, \quad o_R(f) := -\frac{4 \cdot f \cdot \tau_R}{F_s}$$

$$\forall f \,| -\frac{F_s}{2} \leq f < \frac{F_s}{2}: \hat{r}_b[f] := r_b[f] \cdot e^{-j\left(\psi_{Tx,b}(f) + \psi_{Rx,b}(f)\right)}$$

Various terms in the foregoing equations are defined further below in a brief description of the derivation of the edgeless EEPN tracking method. Also, implementation details of an arbitrary-FDM extension of the method are also discussed further below.

Embodiments of the edgeless EEPN tracking method are particularly useful in systems where chromatic dispersion compensation is implemented in both the coherent optical transmitter and the coherent optical receiver. Compensating for both Tx EEPN and Rx EEPN advantageously provides for improved signal-to-noise ratio (SNR) on long paths and also allows for the use of more cost efficient lasers.

One or more aspects of the subject disclosure include a coherent optical receiver that includes an EEPN compensation system that is configured to perform operations. The operations may include calculating at least one metric based on information that is downstream of a chromatic dispersion compensation system that digitally compensates for chromatic dispersion relating to a signal. The operations may further include utilizing the at least one metric to perform EEPN compensation relating to the signal upstream of a carrier phase recovery system that digitally recovers a carrier phase associated with the signal.

One or more aspects of the subject disclosure include a method. The method may include calculating, by an EEPN compensation system of a coherent optical receiver, at least one metric, wherein the coherent optical receiver includes a chromatic dispersion compensation system configured to digitally compensate for chromatic dispersion relating to a signal, and a carrier phase recovery system configured to digitally recover a carrier phase associated with the signal, and wherein the calculating is based on information that is downstream of the chromatic dispersion compensation system. The method may further include utilizing, by the EEPN compensation system, the at least one metric to perform EEPN compensation relating to the signal upstream of the carrier phase recovery system.

One or more aspects of the subject disclosure include a non-transitory machine-readable medium, comprising executable instructions that, when executed by a processing system of a coherent optical receiver including a processor, facilitate performance of operations. The operations may include calculating at least one metric, wherein the coherent optical receiver includes a chromatic dispersion compensation system configured to digitally compensate for chromatic dispersion relating to a signal, and a carrier phase recovery system configured to digitally recover a carrier phase associated with the signal, and wherein the calculating is based on information that is downstream of the chromatic dispersion compensation system. The operations may further include utilizing, by the EEPN compensation system, the at least one metric to perform EEPN compensation relating to the signal upstream of the carrier phase recovery system.

The subject disclosure also describes illustrative embodiments of a time domain EEPN tracking method in which an error estimate is derived based on information from carrier phase recovery, and used to obtain filter coefficients for EEPN compensation of a received signal, where the correlation times of the filter coefficient(s) are substantially equal to delays associated with digital compensation of chromatic dispersion. Based on an example comparison of the performance of the time domain EEPN tracker algorithm and that of an alternative triangular averaging technique, it was determined that the advantageous method provided for noticeably higher SNR.

One or more aspects of the subject disclosure include a coherent optical receiver that includes a decoder configured to generate an error estimate based on information from a carrier phase recovery system that digitally recovers a carrier phase associated with a signal, and an EEPN compensation system configured to perform operations. The operations may include deriving filter coefficients based on the error estimate. The operations may further include using the filter coefficients in an EEPN filter to perform EEPN compensation relating to the signal, wherein a correlation time of at least one of the filter coefficients is substantially equal to a relative delay associated with digital compensation of chromatic dispersion relating to the signal.

One or more aspects of the subject disclosure include a method. The method may include generating, by a processing system including a processor, an error estimate based on information from a carrier phase recovery system that digitally recovers a carrier phase associated with a signal. The method may further include deriving, by the processing system, filter coefficients based on the error estimate. The method may further include using, by the processing system, the filter coefficients to perform EEPN compensation relating to the signal, wherein a correlation time of at least one of the filter coefficients is substantially equal to a relative delay associated with digital compensation of chromatic dispersion relating to the signal.

One or more aspects of the subject disclosure include a non-transitory machine-readable medium, comprising executable instructions that, when executed by a processing system of a device including a processor, facilitate performance of operations. The operations may include generating an error estimate based on information from a carrier phase recovery system that digitally recovers a carrier phase associated with a signal. The operations may further include deriving filter coefficients based on the error estimate. The operations may further include using the filter coefficients to perform EEPN compensation relating to the signal, wherein a correlation time of at least one of the filter coefficients is substantially equal to a relative delay associated with digital compensation of chromatic dispersion relating to the signal.

The subject disclosure also describes, among other things, illustrative embodiments of an impairment compensation system that improves system performance in the presence of linear impairments, such as residual phase noise after carrier recovery, as well as nonlinear impairments, such as those induced by high-power OSCs. In various embodiments, the aforementioned EEPN tracker method may be extended with additional digital filter terms-particularly an on-axis term and an off-axis term-that at least partially compensate for those impairments. Specifically, the aforementioned EEPN tracker method specifically excludes the central tap weight due to the symmetries expected for EEPN. It has been determined, however, that it is advantageous to include the center tap weight. This modification allows the filter to partially correct for any phase noise that is left over by carrier recovery. Inclusion of an off-axis tap also tracks residual polarization crosstalk that is caused by nonlinear XPolM. In essence, embodiments of the impairment compensation system improve system tolerance to high power OSCs with meaningful required signal-to-noise ratio (RSNR) benefit across fiber applications.

One or more aspects of the subject disclosure include a coherent optical receiver. The coherent optical receiver may include a decoder configured to generate an error estimate based on information from a carrier phase recovery system that digitally recovers a carrier phase associated with a signal. The coherent optical receiver may further include an impairment compensation system configured to perform operations. The operations may include deriving a filter coefficient based on the error estimate and estimated symbols of the signal, wherein the filter coefficient is a complex value. Further, the operations may include using the filter coefficient in a digital filter to at least partially compensate for one or more impairments relating to the signal.

One or more aspects of the subject disclosure include a method. The method may include generating, by a processing system including a processor, an error estimate based on information from a carrier phase recovery system that digitally recovers a carrier phase associated with a signal of a first polarization. Further, the method may include deriving, by the processing system, a first filter coefficient based on the error estimate and estimated symbols of the signal, wherein the first filter coefficient is a complex value. Further, the method may include deriving, by the processing system, a second filter coefficient based on the error estimate and estimated symbols of another signal of a second polarization orthogonal to the first polarization, wherein the second filter coefficient is a complex value. Further, the method may include using, by the processing system, the first filter coefficient and the second filter coefficient to at least partially compensate for impairments relating to the signal.

One or more aspects of the subject disclosure include a circuit. The circuit may be configured to generate a first error estimate based on first information from a carrier phase recovery system relating to a first signal of a first polarization, and a second error estimate based on second information from the carrier phase recovery system relating to a second signal of a second polarization orthogonal to the first polarization. Further, the circuit may be configured to derive a first filter coefficient based on the first error estimate, estimated symbols of the first signal, the second error estimate, and estimated symbols of the second signal, wherein the first filter coefficient is a complex value. Further, the circuit may be configured to derive a second filter coefficient based on the first error estimate, the estimated symbols of the first signal, the second error estimate, and the estimated symbols of the second signal, wherein the second filter coefficient is a complex value. Further, the circuit may be configured to use the first filter coefficient and the second filter coefficient to at least partially compensate for impairments relating to the first signal and the second signal.

Other embodiments are described in the subject disclosure.

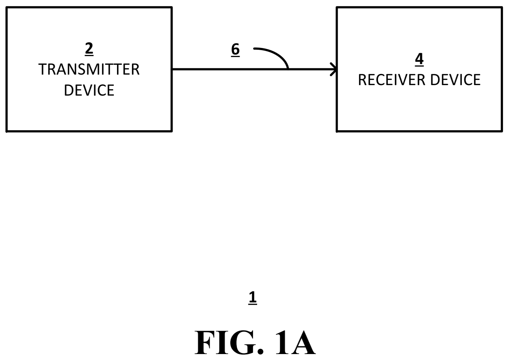

**FIG. 1A** is a diagram of a non-limiting example of a communication network 1 in accordance with various aspects described herein. The communication network 1 may include at least one transmitter device 2 and at least one receiver device 4. The transmitter device 2 may be capable of transmitting signals over a communication channel, such as a communication channel 6. The receiver device 4 may be capable of receiving signals over a communication channel, such as the communication channel 6. In various embodiments, the transmitter device 2 may also be capable of receiving signals and/or the receiver device 4 may also be capable of transmitting signals. Thus, one or both of the transmitter device 2 and the receiver device 4 may be capable of acting as a transceiver.

The communication network 1 may include additional elements not shown in **FIG. 1A.** For example, the communication network 1 may include one or more additional transmitter devices, one or more additional receiver devices, and one or more other devices or elements involved in the communication of signals in the communication network 1.

In some embodiments, the signals that are transmitted and received in the communication network 1 may include optical signals and/or electrical signals. For example, the transmitter device 2 may be a first electrical-based transceiver, the receiver device 4 may be a second electrical-based transceiver, and the communication channel 6 may be an electrical communication channel (e.g., a coaxial cable, a printed circuit board (PCB) trace, or the like). For instance, the communication network 1 may include a SerDes system. As another example, the transmitter device 2 may be a first optical transceiver, the receiver device 4 may be a second optical transceiver, and the communication channel 6 may be an optical communication channel. In certain embodiments, one or both of the first optical transceiver and the second optical transceiver may be a coherent modem.

Where the communication network 1 involves the transmission of optical signals, the communication network 1 may include additional optical elements not shown in **FIG. 1A,** such as wavelength selective switches, optical multiplexers, optical demultiplexers, optical filters, and/or the like. Furthermore, each optical communication channel in the communication network 1 may include one or more links, where each link may include one or more spans, and where each span may include a length of optical fiber and one or more optical amplifiers.

Various elements and effects in an optical link between two communicating devices may result in the degradation of transmitted signals. That is, optical signals received over optical links can become distorted. Particularly, these signals may suffer from polarization mode dispersion (PMD), polarization dependent loss or gain (PDL or PDG), state of polarization (SOP) rotation, amplified spontaneous emission (ASE) noise, wavelength-dependent dispersion or chromatic dispersion (CD), nonlinear noise from propagation through fiber, and/or other effects. For instance, polarization effects of a fiber link tend to rotate the transmitted polarizations such that, at the receiver, they are neither orthogonal to each other nor aligned with the polarization beam splitter of the optical hybrid. As a result, each of the received polarizations (e.g., downstream of the polarization beam splitter) may contain energy from both of the transmitted polarizations, as well as distortions due to CD, PMD, PDL, etc. These problems may be compounded for polarization-division multiplexed signals in which each transmitted polarization contains a respective data signal. The degree of signal degradation due to noise and nonlinearity may be characterized by a signal-to-noise ratio (SNR) or, alternatively, by a noise-to-signal ratio (NSR). The signals transmitted in the communications network may be representative of digital information in the form of bits or symbols. The probability that bit estimates recovered at a receiver differ from the original bits encoded at a transmitter may be characterized by the Bit Error Ratio (BER). As the noise power increases relative to the signal power, the BER may also increase.

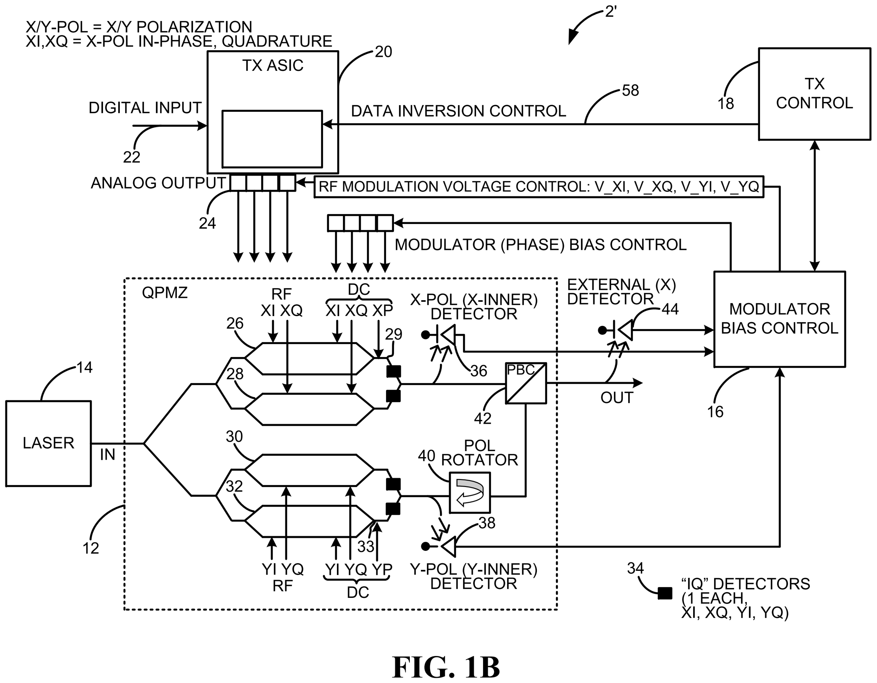

**FIG. 1B** is a block diagram of an example, non-limiting embodiment of a transmitter/modulator system 2' in accordance with various aspects described herein. In one or more embodiments, the transmitter/modulator system 2' may correspond to the transmitter 2 of **FIG. 1A.** As shown in **FIG. 1B,** the transmitter device 2' may include a combination of optical and electrical components, such as, for example, a modulator 12, a laser 14, a modulator bias controller 16, a transmitter (Tx) controller 18, and a Tx application specific integrated circuit (ASIC) 20. The modulator 12 may employ nested Mach-Zehnder (MZ) architecture(s)-i.e., two dual-parallel MZs (DPMZs), each with two inner MZs and one outer MZ-resulting in a quad parallel MZ (QPMZ) modulator.

In one or more embodiments, the optical modulator system 2' may be equipped to control four quadrature data signals (i.e., radio frequency (RF) XI, RF XQ, RF YI, RF YQ signals, where X, Y denote polarization and I, Q denote in-phase and quadrature, respectively) via the Tx ASIC 20. The modulator 12 may include an XI modulator 26, an XQ modulator 28, and an outer phase modulator 29 (respectively functioning as two inner MZs nested within an outer MZ for the X polarization) as well as a YI modulator 30, a YQ modulator 32, and an outer phase modulator 33 (respectively functioning as two inner MZs nested within an outer MZ for the Y polarization). Each MZ may have one or two DC electrodes depending on the implementation of the MZ. The laser 14 may provide a laser output for modulation by the modulator 12. The laser output may be divided (e.g., via a beam splitter) into X and Y polarizations, where the X polarization may be further divided (e.g., via another beam splitter) into an optical I input that is fed into an X-pol I-arm (i.e., the XI modulator 26) and an optical Q input that is fed into an X-pol Q-arm (i.e., the XQ modulator 28), and where the Y polarization may be further divided (e.g., via yet another beam splitter) into an optical I input that is fed into a Y-pol I-arm (i.e., the YI modulator 30) and an optical Q input that is fed into a Y-pol Q-arm (i.e., the YQ modulator 32). The modulator 12 may be capable of independently generating orthogonal optical electric field components (I channel and Q channel) for each polarization X and Y, according to various types of multi-value modulation methods, such as N-quadrature amplitude modulation (QAM), differential quadrature phase shift keying (D-QPSK), etc.

In general operation, the Tx ASIC 20 may receive a digital information stream at a digital input 22 and convert the digital information stream (based on an associated modulation scheme) for driving the modulator 12 via analog outputs 24 (RF XI, RF XQ, RF YI, RF YQ). The analog outputs 24 may be communicatively coupled to the modulator 12. In some embodiments, the Tx ASIC 20 may include a digital filter that provides a transfer function H on the received digital input 22. A digital-to-analog (D/A) converter may be connected to an output of the digital filter, and an analog amplifier may be connected to an output of the D/A converter to provide a gain G. An output of the analog amplifier may provide the analog output 24 to the modulator 12. In certain embodiments, a controller may be connected to the digital filter and the analog amplifier to control the transfer function H and/or the gain G responsive to a data inversion control signal 58 from the Tx controller 18.

A detector 34 (also referred to as a tap-detector) may be included at an output of each of the modulators 26, 28, 30, 32. In certain embodiments, some or all of the modulators 26, 28, 30, 32 may be referred to as inner modulators and can be amplitude, phase, or mixed phase/amplitude modulators. In one or more embodiments, some or all of the modulators 26, 28, 30, 32 may be phase modulators. As shown, the modulator 12 may include an X-polarization detector 36 that is coupled to a combined output of the modulators 26, 28 (or the output of the outer MZ 29), and a Y-polarization detector 38 that is coupled to a combined output of the modulators 30, 32 (or the output of the outer MZ 33). A polarization rotator 40 may be connected to the combined output of the modulators 30, 32. A polarization beam combiner 42 may be connected to the combined output of the modulators 26, 28 and the combined output of the modulators 30, 32. An output of the polarization beam combiner 42 may provide a modulated output of the modulator 12, and an external detector 44 may be tapped off of the output. The various detectors 34, 36, 38, 44 may be communicatively coupled to the modulator bias controller 16.

As shown **in FIG. 1B,** several modulator bias points of the modulator 12 may be controlled or optimized via the modulator bias controller 16. In some embodiments, the Tx controller 18 may control the Tx ASIC 20 and/or the modulator bias controller 16. In various embodiments, the Tx controller 18 may control the modulator bias controller 16 in the following ways: (i) open loop control where bias control loops can be opened, enabling direct control of biases and measurement of the detectors 34, 36, 38, 44; and/or (ii) closed loop control where the feedback polarity of the modulator bias controller 16 can be set, but where the modulator bias controller 16 itself implements the feedback control. The Tx controller 18 may identify (e.g., optimum) bias points whereas the modulator bias controller 16 may maintain those points in service. In some embodiments, the modulator bias controller 16 may control the generated analog output signals of the Tx ASIC 20, rather than control bias values of the modulator 12.

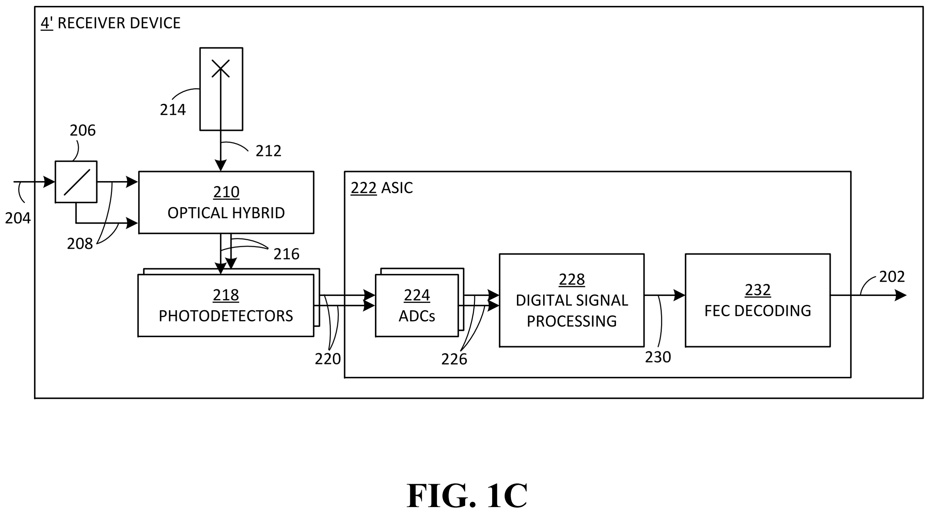

FIG. 1C is a block diagram of an example, non-limiting embodiment of a receiver device 4' in accordance with various aspects described herein. In one or more embodiments, the receiver device 4' may correspond to the receiver 4 of **FIG. 1A.** In various embodiments, the receiver device 4' may be configured to receive an optical signal 204, which may comprise a degraded version of an optical signal generated by a transmitter device (e.g., the transmitter device 2' of **FIG. 1B**). The optical signal generated by the transmitter device may be representative of information bits (also referred to as client bits) which are to be communicated to the receiver device 4'. The optical signal generated by the transmitter device may be representative of a stream of symbols. According to some examples, the transmitter device may be configured to apply forward error correction (FEC) encoding to the client bits to generate FEC-encoded bits, which may then be mapped to one or more streams of data symbols. The optical signal transmitted by the transmitter device may be generated using any of a variety of techniques, such as frequency division multiplexing (FDM), polarization-division multiplexing (PDM), single polarization modulation, modulation of an unpolarized carrier, mode-division multiplexing, spatialdivision multiplexing, Stokes-space modulation, polarization balanced modulation, wavelength division multiplexing (WDM) (where a plurality of data streams is transmitted in parallel, over a respective plurality of carriers, and where each carrier is generated by a different laser), and/or the like.

The receiver device 4' may be configured to recover corrected client bits 202 from the received optical signal 204. The receiver device 4' may include a polarizing beam splitter 206 configured to split the received optical signal 204 into polarized components 208. According to one example implementation, the polarized components 208 may include orthogonally polarized components corresponding to an X polarization and a Y polarization. An optical hybrid 210 may be configured to process the components 208 with respect to an optical signal 212 produced by a laser 214, thereby resulting in optical signals 216. Photodetectors 218 may be configured to convert the optical signals 216 output by the optical hybrid 210 to analog electrical signals 220. The frequency difference between the Rx laser and the Tx laser is the Intermediate Frequency, and an offset of that away from nominal can be called fIF. (The nominal difference is usually zero.) According to one example implementation, the analog electrical signals 220 may include four signals corresponding, respectively, to the dimensions XI, XQ, YI, and YQ, where XI and XQ denote the in-phase and quadrature components of the X polarization, and YI and YQ denote the in phase and quadrature components of the Y polarization. Together, elements such as the beam splitter 206, the laser 214, the optical hybrid 210, and the photodetectors 218 may form a communication interface configured to receive optical signals from other devices in a communication network.

As shown in **FIG. 1C,** the receiver device 4' may include an ASIC 222. The ASIC 222 may include analog-to-digital converters (ADCs) 224 that are configured to sample the analog electrical signals 220 and generate respective digital signals 226. In certain alternate embodiments, the ADCs 224 or portions thereof may be separate from the ASIC 222. The ADCs 224 may sample the analog electrical signals 220 periodically at a sample rate that is based on a signal received from a voltage-controlled oscillator (VCO) at the receiver device 4' (not shown). The ASIC 222 may be configured to apply digital signal processing to the digital signals 226 using a digital signal processing system 228. The digital signal processing system 228 may be configured to perform equalization processing that is designed to compensate for a variety of channel impairments, such as CD, SOP rotation, mean PMD that determines the probability distribution which instantiates as differential group delay (DGD), PDL or PDG, and/or other effects. The digital signal processing system 228 may further be configured to perform carrier recovery processing, which may include calculating an estimate of carrier frequency offset fIF (i.e., the difference between the frequency of the transmitter laser and the frequency of the receiver laser 214). According to some example implementations, the digital signal processing system 228 may further be configured to perform operations such as multiple-input-multiple-output (MIMO) filtering, clock recovery, and FDM subcarrier demultiplexing. The digital signal processing system 228 may also be configured to perform symbol-to-bit demapping (or decoding) using a decision circuit, such that signals 230 output by the digital signal processing system 228 are representative of bit estimates. Where the received optical signal 204 is representative of symbols comprising FEC-encoded bits generated as a result of applying FEC encoding to client bits, the signals 230 may further undergo FEC decoding 232 to recover the corrected client bits 202.

According to some example implementations, the equalization processing implemented as part of the digital signal processing system 228 may include one or more equalizers, some or all of which may be configured to compensate for impairments in the channel response. In general, an equalizer applies a substantially linear filter to an input signal to generate an output signal that is less degraded than the input signal. The filter may be characterized by compensation coefficients which may be incrementally updated from time to time (e.g., every so many clock cycles or every so many seconds) with the goal of reducing the degradation observed in the output signal.

Turning now to the Rx EEPN tracking method (and focusing solely on the X polarization (X-Pol) for the sake of brevity, with the understanding that the same or similar steps may be applied to the Y polarization (Y-Pol)), let $r_b(f)$ represent the content in a received X-Pol frequency bin f of an FFT block b after Rx chromatic dispersion compensation, and let $s_b(f)$ represent the content in a corresponding transmitted frequency bin f of FFT block b. Assuming that there is no Additive White Gaussian Noise (AWGN), that clock offset/jitter $\tau$ is in unit intervals, and the approximation that the laser phase noise is constant over the time duration of one FFT block b, we expect:

$$r_b(f) = e^{j\left(\phi_{Tx}(b) + \phi_{Rx}\left(b + \frac{f}{F_s}\cdot\Delta\right) + \frac{f}{F_s}\cdot 2\pi\cdot\tau\right)} \cdot s_b(f)$$

where $\phi_{Rx}(b)$ and $\phi_{Tx}(b)$ are the Rx and Tx laser phase noises corresponding to the FFT block with index b, and $\Delta$ is the walk-off that is experienced due to chromatic dispersion in the channel between $\frac{F_s}{2}$ and $-\frac{F_s}{2}$ (where $F_s$ is the baud rate) and that is calculated in units of number of FFT blocks.

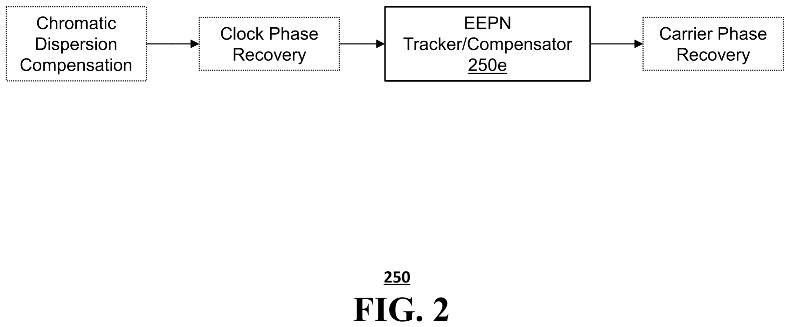

Let $\phi_G(b)$ be the output of a clock phase detector (e.g., the clock phase recovery block in **FIG. 2**) for each FFT block b, which is the sum of any clock recovery offset and the delay effect of chromatic dispersion that is associated with the Rx laser phase noise. For any frequency f where there is energy at both $r_b(f)$ and $r_b(f - F_s)$, the detected clock phase, in the absence of AWGN and assuming no clock jitter ($\tau = 0$), is:

$$\phi_G(b) = \phi_{Rx}\left(b + \frac{\Delta}{2}\right) - \phi_{Rx}\left(b - \frac{\Delta}{2}\right)$$

Hence, Rx laser phase noise $\phi_{Rx}(b)$ can be reconstructed by collecting the clock phase detector outputs for different FFT blocks $\phi_G(b, b - 1, b - 2, ...)$.

Rather than recovering the absolute Rx laser phase noise, a differential Rx laser phase noise $\phi_{Rx}\left(b + \frac{f}{F_s}\cdot\Delta\right) - \phi_{Rx}(b)$ can be obtained, which when eliminated from the signal means that all frequency bins f observe a common Rx laser phase noise value $\phi_{Rx}(b)$ that the time-domain carrier recovery circuit (e.g., the rightmost block in **FIG. 2**) can track. Letting incremental Rx laser frequency noise $v_{Rx}(b)$ be defined as:

$$v_{Rx}(b) \coloneqq \phi_{Rx}(b + 1) - \phi_{Rx}(b)$$

and the frequency induced time walk-off between frequency f and direct current (DC) to be defined as:

$$d(f) := \frac{f}{F_s} \cdot \Delta$$

allows for the differential laser phase noise corresponding to frequency $f$ to be estimated as:

$$\theta_b(f) := \phi_{Rx}\left(b + \frac{f}{F_s} \cdot \Delta\right) - \phi_{Rx}(b)$$

$$= v_{Rx}(b + \lfloor d(f) \rfloor) \cdot (d(f) - \lfloor d(f) \rfloor) + \sum_{c=0}^{\lfloor d(f) \rfloor - 1} v_{Rx}(b + c)$$

Applying the differential phase correction to the received content of frequency $f$ results in:

$$\hat{r}_b(f) := r_b(f) \cdot e^{-j\theta_b(f)} = e^{-j\left(\phi_{Rx}\left(b + \frac{f}{F_s} \cdot \Delta\right) - \phi_{Rx}(b)\right)} \cdot e^{j\left(\phi_{Tx}(b) + \phi_{Rx}\left(b + \frac{f}{F_s} \cdot \Delta\right)\right)} \cdot s_b(f)$$

$$= e^{j(\phi_{Tx}(b) + \phi_{Rx}(b))} \cdot s_b(f)$$

In this way, EEPN noise may be translated into a common phase noise that can easily be tracked by the carrier phase recovery process.

To (e.g., optimally) estimate $v_{Rx}(b)$ from $\phi_G(b)$, Wiener filter taps that, when convolved with the clock phase detector output, provide an MMSE estimate of laser frequency noise $v_{Rx}(b)$, can be analytically learned. The optimum solution of a $2K + 1$ tap Wiener filter $h[-K \dots K]$ that best estimates Rx laser frequency noise $v_{Rx}(b)$ from the clock phase detector output $\phi_G(b)$ is:

$$h_{opt} := R_{\phi_G, v_{Rx}} \cdot R_{\phi_G}^{-1}$$

where $R_{\phi_G, v_{Rx}}$ is the cross-correlation vector between $\phi_G(b)$ and $v_{Rx}(b)$, and $R_{\phi_G}$ is the Toeplitz matrix that is calculated from the autocorrelation function of $\phi_G(b)$. Assuming that both the clock phase detector background noise and the Rx laser frequency noise $v_{Rx}(b)$ are white, the Toeplitz matrix $R_{\phi_G}$ can be calculated from $R_\phi(\tau)$ as:

$$R_{\phi_G} := \begin{bmatrix} R_\phi(0) & R_\phi(1) & R_\phi(2) & \dots \\ R_\phi(1) & R_\phi(0) & R_\phi(1) & \dots \\ R_\phi(2) & R_\phi(1) & R_\phi(0) & \dots \\ \dots & \dots & \dots & \dots \end{bmatrix}$$

Further, the cross-correlation function $R_{\phi_G, v_{Rx}}$ can be calculated as:

$$R_{\phi_G, v_{Rx}}(\tau) := E\{\phi_G(b) \cdot v_{Rx}(b + \tau)\}$$

$$= \max\left(0, \min\left(\frac{\Delta}{2}, \tau + 1\right) - \max\left(-\frac{\Delta}{2}, \tau\right)\right) \cdot \frac{N_{NOS} \cdot 2 \cdot \pi \cdot L_{LW}}{F_s}$$

where $N_{NOS}$ is the number of non-overlapping symbols of the Inverse FFT (IFFT), and $L_{LW}$ is laser linewidth in Hz. The Wiener filter solution $h_{opt}$ can then be determined from the results of these two calculations.

A pure Wiener filter implementation would require hundreds of taps in time in order to provide suitable performance. To simplify, the Wiener filter can be approximated such that only the Rx laser frequency noise for b and b - $\Delta$ are used, i.e. where:

$$\hat{v}_{Rx}(b) = \sum_{l=0}^{L} \sum_{m=-M}^{M} h_l(m) \cdot \phi_G\left(b - \frac{\Delta}{2} - l\Delta - m\right)$$

This lends to the possibility of a further approximation of the Wiener filter by an ARMA filter, where the terms contributing to the Wiener filter corresponding to $l > 0$ are modeled by an infinite impulse response (IIR) portion of the ARMA filter, i.e., as:

$$H(z) = \frac{z^{-\frac{\Delta}{2}} \sum_{m=-M}^{M} h_n(m)\, z^{-m}}{1 - z^{-\Delta} \sum_{q=-Q}^{Q} h_d(q) z^{-q}}$$

where $h_n(m)$ and $h_d(m)$ denote the nominator and denominator polynomials respectively and the denominator filter is assumed to have 2Q + 1 taps. In this way, the overall filtering can be modeled as:

$$\hat{v}_{Rx}(b) := \sum_{m=-M}^{M} h_n(m) \cdot \phi_G\left(b - \frac{\Delta}{2} - m\right) + \sum_{q=-Q}^{Q} h_d(q) \cdot \hat{v}_{Rx}(b - \Delta - q)$$

Focusing now on the edgeless EEPN tracking method, let $r_b[f]$ represent a 2 × 1 vector composed of X-Pol and Y-Pol projections that correspond to a received FFT block b and frequency bin f:

$$r_b[f] := \left[r_{b,X}[f], r_{b,Y}[f]\right]^T$$

Assuming that known symbols are present in a significant proportion of the received FFT blocks, and where a 2 × 1 frequency-template vector $s[f]$ corresponding to frequency bin f is used for edgeless clock recovery, positive-side and negative-side complex estimates $m_+$ and $m_-$ may be obtained by cross-correlating the received FFT vector with the frequency-template vector over positive and negative halves of the signal spectrum, as follows:

$$m_+[b] := \sum_{f=0}^{\frac{F_s}{2}} s^H[f] \cdot r_b[f]$$

$$m_-[b] := \sum_{f=-\frac{F_s}{2}}^{0} s^H[f] \cdot r_b[f]$$

where $s^H[f]$ denotes the complex Hermitian (i.e., conjugate transpose) of vector $s[f]$. Rather than calculating the $\text{Angle}(m_+ \cdot m_-^*)$ as would typically be done in edgeless clock recovery, the individual angles of $m_+$ and $m_-$ may be calculated instead:

$$\phi_+[b] := \text{Angle}(m_+[b])$$

$$\phi_-[b] := \text{Angle}(m_-[b])$$

To better track the impact of EEPN on the positive and negative clock phase values $\phi_+[b]$ and $\phi_-[b]$, let $\theta_{Tx}(b)$ and $\theta_{Rx}(b)$ represent the Tx and Rx laser phase noises, respectively. In an example walk-off model, let $\tau_T$ and $\tau_R$ represent the walk-offs between centers of the positive and negative halves of the spectrum with respect to DC (0 Hz frequency) that result from Tx and Rx chromatic dispersion compensation, and let $\tau_C$ represent the walk-offs between the centers of the spectrum halves and DC that result from chromatic dispersion in the fiber. Per the walk-off model, the relationships between positive and negative phase estimates $\phi_+(b)$ and $\phi_-(b)$ and the true or actual Tx and Rx laser phase noise values $\theta_{Tx}$ and $\theta_{Rx}$ are as follows:

$$\phi_+(b) = w_{\tau_T}(b) * \theta_{Tx}(b + \tau_T) + w_{\tau_R}(b) * \theta_{Rx}(b - \tau_R)$$

$$\phi_-(b) = w_{\tau_T}(b) * \theta_{Tx}(b - \tau_T) + w_{\tau_R}(b) * \theta_{Rx}(b + \tau_R)$$

where $w_{\tau_T}(b)$ and $w_{\tau_R}(b)$ are rectangular FIRs with respective taps $2\tau_T + 1$ and $2\tau_R + 1$ of equivalent width. A generic FIR $w_d(t)$ may thus be defined as:

$$w_d(t) := \begin{cases} \dfrac{1}{2 \cdot \text{Round}(d) + 1} & if \quad |t| \le \text{Round}(d) \\ 0 & otherwise \end{cases}$$

The Tx and Rx laser phase noise estimates $\phi_T(b)$ and $\phi_R(b)$ may be decoupled from one another to facilitate better tracking, by delaying the estimate of one spectrum half estimate and subtracting it from the estimate of the other spectrum half. Letting incremental Tx laser frequency noise $v_{Tx}(b)$ and incremental Rx laser frequency noise $v_{Rx}(b)$ be defined as:

$$v_{Rx}(b) := \theta_{Rx}(b) - \theta_{Rx}(b - 1)$$

$$v_{Tx}(b) := \theta_{Tx}(b) - \theta_{Tx}(b - 1),$$

the respective relationships between the edgeless Tx and Rx laser phase noise estimates $\phi_T(b)$ and $\phi_R(b)$ and the Tx and Rx laser frequency noise values $v_{Tx}(b)$ and $v_{Rx}(b)$ are as follows:

$$\phi_T(b) = w_{\tau_T}(b) * w_{\tau_T + \tau_R}(b) * v_{Tx}(b)$$

$$\phi_R(b) = w_{\tau_R}(b) * w_{\tau_T + \tau_R}(b) * v_{Rx}(b)$$

Rather than recovering the absolute Tx and Rx laser phase noises, differential laser phase noise (i.e. laser frequency noise) can be obtained to facilitate correction of Tx and Rx laser phase walk-offs across the spectrum such that the laser phase noise is generally aligned in the signal's spectrum. Carrier phase recovery is assumed to then (e.g., fully) correct for the remaining common laser phase noise. To elaborate, the main cause of Tx/Rx EEPN is the presence of phase noise of the Tx/Rx laser. In the absence of chromatic dispersion compensation, this laser phase noise remains temporally aligned across the signal's spectrum, which allows for straightforward correction in the time domain by way of carrier phase recovery. Because chromatic dispersion introduces a delay as a function of frequency, chromatic dispersion compensation involves the application of an opposite delay as a function of frequency to counter the degradation effect. However, such compensation undesirably delays the laser phase noise as a function of frequency such that the laser phase noise is no longer temporally aligned across the signal's spectrum. As a consequence, the original laser phase noise experiences different time delays across various frequencies, resulting in EEPN. Applying the Tx and Rx laser phase walk-off corrections described herein advantageously seeks to bring the laser phase noise back into (e.g., perfect or near perfect) temporal alignment across the signal's spectrum, resulting in mere common laser phase noise that carrier phase recovery can easily track.
To (e.g., optimally) estimate $v_{Tx}(b)$ from $\phi_T(b)$, Wiener filter taps can be analytically learned by calculating the auto-correlation function of $\phi_T(b)$ as well as the cross-correlation between $\phi_T(b)$ and $v_{Tx}(b)$:

$$R_{\phi_T}(t) := E\{\phi_T(t) * \phi_T(-t)\}$$

$$= \frac{2\pi \cdot L_w}{F_s} \cdot w_{\tau_T}(b) * w_{\tau_T}(b) * w_{\tau_T + \tau_R}(b) * w_{\tau_T + \tau_R}(b) + \sigma_{AWGN}^2 \cdot \delta(t)$$

$$R_{\phi_T, v_{Tx}}(t) := E\{\phi_T(t) * v_{Tx}(-t)\} = \frac{2\pi \cdot L_w}{F_s} \cdot w_{\tau_T}(b) * w_{\tau_T + \tau_R}(b)$$

where $\sigma_{AWGN}$ is the standard deviation of the noise that is present in the EEPN estimation due to ASE noise, $L_W$ is the laser linewidth in Hz, and $\delta(t)$ is the Dirac delta function. $R_{\phi_T}(t)$ allows for the derivation of the Toeplitz auto-correlation matrix of $\phi_T$ (b), which can be used to calculate the Wiener filter tap values as follows:

$$h_{Tx}(t) := \left(Toeplitz\left(R_{\phi_T}(t)\right)\right)^{-1} \cdot R_{\phi_T, v_{Tx}}(t)$$

where *Toeplitz($\bar{x}$)* is a Toeplitz matrix whose first row and first column are equal to vector $\bar{x}$. The Wiener filter solution $h_{Rx}(t)$ for the Rx laser frequency estimation can be derived in a manner similar to that for the Tx laser frequency estimation.

Letting the Tx and Rx laser frequency noise estimates $\hat{v}_{Tx}(t)$ and $\hat{v}_{Rx}(t)$ be defined as:

$$\hat{v}_{Tx}(t) := h_{Tx}(t) * \phi_T(t)$$

$$\hat{v}_{Rx}(t) := h_{Rx}(t) * \phi_R(t),$$

the Tx and Rx differential laser corrections for frequency f may be calculated as follows:

$$\psi_{Tx,b}(f) := \hat{v}_{Tx}(b + \lfloor o_T(f) \rfloor) \cdot (o_T(f) - \lfloor o_T(f) \rfloor) + \sum_{c=0}^{\lfloor o_T(f) \rfloor - 1} \hat{v}_{Tx}(b + c)$$

$$\psi_{Rx,b}(f) = \hat{v}_{Rx}(b + \lfloor o_R(f) \rfloor) \cdot (o_R(f) - \lfloor o_R(f) \rfloor) + \sum_{c=0}^{\lfloor o_R(f) \rfloor - 1} \hat{v}_{Rx}(b + c)$$

where $o_T(f)$ and $o_R(f)$ are the walk-off values associated with the Tx and Rx laser phase noises for frequency *f* against DC, and where $\psi_{Tx,b}(f)$ and $\psi_{Rx,b}(f)$ are the phase correction terms that can be applied to the content of frequency bin *f* of burst *b* such that the walk-off effects of the Tx and RX laser phase noises across the signal's spectrum are compensated for and thus the Tx and Rx laser phase noises are (e.g., completely) aligned across all frequency bins. The Tx and Rx laser phase noises across frequency can therefore be corrected or mitigated via rotation of content of the signal at the various frequencies in the two-dimensional (2D) complex plane by the walk-off correction amounts $\psi_{Tx,b}(f)$ and $\Psi_{Rx,b}(f)$. Such rotation can involve multiplication by a complex value, the use of an algorithm such as a coordinate rotation digital computer (CORDIC), and/or other operations.

In a case where there are "K" FDM-subcarriers (K > 2) in the received signal, where parallel signal streams at parallel frequencies all share the same optical carrier, the edgeless EEPN tracking algorithm can decouple the noise that is associated with the different subcarriers by using clock phase information relating to one or more (e.g., each) of the FDM subcarriers. This can result in better estimates of the Tx and Rx laser frequency noise values $v_{Tx}(t)$ and $v_{Rx}(t)$. Specifically, clock phase information corresponding to each of K FDM subcarriers can be obtained as follows:

$$\forall k \mid 0 \leq k \leq K - 1: \quad \phi_k[b] := \text{Angle}\left(\sum_{f=-\frac{F_s}{2}+\frac{k \cdot F_s}{K}}^{-\frac{F_s}{2}+\frac{(k+1) \cdot F_s}{K}} s^H[f] \cdot r_b[f]\right)$$

For instance, for K = 4, the metric can be a vector of length four that includes the clock phase information corresponding to the 4 subcarriers:

$$\phi_3[b] := \text{Angle}\left(\sum_{f=\frac{F_S}{4}}^{\frac{F_S}{2}} s^H[f] \cdot r_b[f]\right)$$

$$\phi_2[b] := \text{Angle}\left(\sum_{f=0}^{\frac{F_S}{4}} s^H[f] \cdot r_b[f]\right)$$

$$\phi_1[b] := \text{Angle}\left(\sum_{f=-\frac{F_S}{4}}^{0} s^H[f] \cdot r_b[f]\right)$$

$$\phi_0[b] := \text{Angle}\left(\sum_{f=-\frac{F_S}{2}}^{-\frac{F_S}{4}} s^H[f] \cdot r_b[f]\right)$$

In certain embodiments, multiple metrics may be obtained for each subcarrier, such as clock phase information for the positive and negative spectrum halves for each subcarrier, similar to that described above with respect to the equations $\phi_+[b] := \text{Angle}(m_+[b])$ and $\phi_-[b] := \text{Angle}(m_-[b])$. In these embodiments, the vector would have a longer length- e.g., eight in the case where two metrics per the 4 subcarriers are obtained and included in the vector.

The (e.g., optimum) multi-dimensional filters $h_{Tx}(k, d)$, $h_{Rx}(k, d)$ that provide the best estimates of the true Tx and Rx laser frequency noises can be learned. For example, tap values may be obtained based on an MMSE criterion that is determined by the Wiener filter solution:

$$\overline{h}_{Tx} := \underset{\overline{h}}{\arg\min} \left| v_{Tx}(b) - \sum_{k=0}^{K-1} \sum_{d=-D}^{D} h(k, d) \cdot \phi_k[b - d] \right|^2$$

$$\overline{h}_{Rx} := \underset{\overline{h}}{\arg\min} \left| v_{Rx}(b) - \sum_{k=0}^{K-1} \sum_{d=-D}^{D} h(k, d) \cdot \phi_k[b - d] \right|^2$$

The multi-dimensional Wiener filter can then be applied to estimate the Tx and Rx laser frequency noises as follows:

$$\hat{v}_{Tx}(b) = \sum_{k=0}^{K-1} \sum_{d=-D}^{D} h_{Tx}(k, d) \cdot \phi_k[b - d]$$

$$\hat{v}_{Rx}(b) = \sum_{k=0}^{K-1} \sum_{d=-D}^{D} h_{Rx}(k, d) \cdot \phi_k[b - d]$$

where the steps for calculating the Tx and Rx differential laser corrections for frequency $f$ and applying the phase corrections, as described above, may be similarly performed for the K subcarriers.

**FIG. 2** is a high-level block diagram 250 illustrating an example location of the EEPN tracker/compensator algorithm in the signal flow relative to other digital processing blocks in a receiver, in accordance with various aspects described herein. As shown, the EEPN tracker/compensator block 250e (which may implement the Rx EEPN tracker algorithm or the edgeless EEPN tracker algorithm described herein) may be located downstream of chromatic dispersion compensation and clock phase detection, but upstream of carrier phase recovery.

It is to be understood and appreciated that above-described derivations of the Rx EEPN tracking algorithm and the edgeless EEPN tracking algorithm rely on simplified assumptions for purposes of brevity and clarity. In practice, numerous variations are possible and thus aspects of one or more of these tracking algorithms may be adapted accordingly. For instance, AWGN, other noise, nonlinear degradations, clock jitter, and/or clock phase offset can be present. There might be multiple clock phase detectors rather than just one. At least some of the symbols in the received signal may be correlated. While the derivations generally focused on the X-pol, the received signal can be dual-polarization. The polarization(s) can also be subject to polarization rotation, polarization dependent loss, and/or polarization mode dispersion.

As some other examples, in addition to Rx digital compensation for chromatic dispersion, Tx digital compensation for chromatic dispersion can also be present. The Rx chromatic dispersion compensation might be distributed in multiple functional blocks, or might be combined with other functions such as in digital back propagation. The amount of Rx chromatic dispersion compensation might be low or minimal, with the (e.g., vast) majority of the chromatic dispersion compensation being in the Tx. Within any given FFT block, the Tx and/or Rx laser phase noise can, of course, vary. At least some FFT blocks can also overlap with one another. The overall communication system may or may not use FFTs-e.g., the system might use other chromatic dispersion compensation techniques, such as those involving time domain FIR or IIR or Fermat transforms. The spectral width of the received signal can be greater than the baud rate (e.g., it may have a Root Raised Cosine spectrum), can be Nyquist, or can be narrower than the baud rate. In a scenario where multiple FDM symbol streams are present in the received signal, the Rx EEPN tracking algorithm or the edgeless EEPN tracking algorithm can be applied to each such stream separately or, alternatively, to some or all of the streams jointly.

While the differential approach taken in the derivations of the exemplary tracking algorithms above is advantageous, absolute methods or other methods can alternatively be used. Also, while it is generally convenient to be differential relative to the phase at frequency $f = 0$, other single or plural base frequencies can alternatively be used.

While it is advantageous to have carrier phase detection completely downstream of the EEPN compensation, carrier phase detection might be implemented in multiple blocks, in which case only some of these blocks, for instance, may be downstream of the EEPN compensation.

The Rx laser can have relative intensity noise (RIN), crosstalk, microphonics, power supply ripple, dithers, and/or other imperfections, which either tracking algorithm may be adapted to account for. Rather than using a laser as the Rx light source, an extracted optical tone, a comb, or other optical, analog, or digital methods of creating optical mixing products can alternatively be used in the Rx.

Different Tx and Rx lasers may be utilized, and thus these lasers can have different phase noise characteristics. The laser offset frequency (or intermediate frequency (IF)-i.e., $f_{IF}$) can be near zero or, alternatively, a larger, fixed or variable IF can be used in the system.

The overall hardware unit that encompasses the various processing blocks can be single-directional or bidirectional. Aspects of either tracking algorithm can be improved or optimized for heat, such as with a plug (i.e., pluggable optics), or can be improved or optimized for performance as desired.

It is generally advantageous to digitally compensate for chromatic dispersion in the received signal, and then estimate the clock phase from the resulting compensated signal. In some implementations, the received signal (or portion(s) thereof) can alternatively be duplicated, prior to the main chromatic dispersion compensation, for the purpose of clock phase detection, where certain required chromatic dispersion compensation is performed and incorporated into the beginning stages of the clock phase detection algorithm. In these implementations, the clock phase estimation may be downstream of this incorporated compensation, and the Rx EEPN tracking method may utilize information from such clock phase estimation.

In various embodiments, either of the Rx EEPN tracking algorithm or the edgeless EEPN tracking algorithm can be combined with other method(s) that are implemented at other locations in the signal flow. For example, either EEPN tracking algorithm can be combined with processing that is associated with the optical detection of the Rx laser phase.

While the advantageous EEPN tracking algorithms are described herein as involving the use of detected clock phase, other clock-phase related information-e.g., some precursor information that is obtained prior to determining the clock phase, some scaled value that is associated with the detected clock phase, etc.-can alternatively be used.

Let $r_X(t)$, $r_Y(t)$ (or $r_{X,Y}(t)$), corresponding to the X and Y polarizations, represent an input signal to the time domain EEPN tracker, with sampling times $t = nT$. Let $s_X(t)$, $s_Y(t)$, corresponding to the X and Y polarizations, represent transmitted T-spaced samples (where samples occur at the symbol interval). Focusing solely on the X polarization for the sake of brevity, with the understanding that the same or similar steps may be applied to the Y polarization, assume that the transmitted T-spaced samples are white, and thus the data therein is uncorrelated and any Tx pulse shaping has zero T-spaced inter-symbol interference (ISI). For initial simplicity of analysis, let us consider an idealized system where EEPN is the only degradation. Also assume that the input signal has already undergone (e.g., perfect) carrier phase recovery, and thus the common Tx laser phase noise and the common Rx laser phase noise have already been tracked by the carrier phase recovery. This leaves the distortion due to the walk-off effect of the Rx laser phase noise that results from Rx chromatic dispersion compensation as the remaining EEPN in the input signal. Letting $R_X(f)$ represent the spectrum of $r_X(t)$, and assuming that we have a system that is noise-less (i.e., that has no ASE noise), we have:

$$R_X(f) = S_X(f) \cdot e^{j(\theta(t+\Delta \cdot f) - \theta_C(t))}$$

where $\theta(t)$ is the Rx laser phase noise at time $t$, $\theta_C(t)$ is the common Rx laser phase noise, and $\Delta$ is the amount of walk-off time for a 1 Hz change in frequency due to chromatic dispersion compensation. Assume that the Rx laser phase noise is Lorentzian, with a variance around $\theta_C(\tau)$ that is equal to $2\pi \cdot \Lambda v \cdot |t - \tau|$ for any time $t$, where Av is the 3-decibel (dB) down laser linewidth in Hz, and $\tau$ is any baseline time in units of seconds. See Section 4.3 of Ezra Ip et al., "Coherent detection in optical fiber systems," in Optics Express, vol. 16 no. 2, January 21, 2008, which is incorporated by reference herein in its entirety.

Because the signal spectrum at frequency $f$ experiences an actual or true Rx laser phase noise value of $\theta(t + \Delta \cdot f)$ due to the walk-off effect that results from Rx chromatic dispersion compensation, the content of the signal at frequency $f$ will be rotated by an angle equal to $\theta(t + \Delta \cdot f) - \theta_C(t)$. Assuming that this angle is small enough, the exponential term in $R_X(f)$ can be approximated using a 1st order Taylor series expansion, where the degradation is represented as a purely additive function of $S_X(f)$, or equivalently, $s_X(t)$.

Consider the time domain dual-polarization error signal as follows:

$$e_{X,Y}(t) := r_{X,Y}(t) - s_{X,Y}(t)$$

which, for the X polarization in the frequency domain, corresponds to:

$$E_X(f) = R_X(f) - S_X(f) \approx S_X(f) \cdot j \cdot \left(\theta(t + \Delta \cdot f) - \theta_C(t)\right)$$

Applying the inverse-Fourier transform to $E_X(f)$ yields the time domain EEPN impulse response $f_t(t)$ defined as:

$$f_t(t) := IFFT\left\{j \cdot \left(\theta(t + \Delta \cdot f) - \theta_C(t)\right)\right\}$$

where the Fourier transform of $f_t(t)$ is purely imaginary. Note that the filter is oddly conjugate symmetric:

$$f_t(-t) = -f_t^*(t)$$

which allows for the number of complex multiply operations to be reduced by a factor of two, and thus lowering the cost of filtering. For instance, the second term of the multiplication operation can simply involve two bits rather than eight bits, or eleven bits, etc. Also note that the value of tap "0" is 0 given the aforementioned assumptions relating to $\theta_C(t)$. The frequency response of the EEPN is $H(f) = j \cdot (\theta(t + \Delta \cdot f) - \theta_C(t))$. Based on the Lorentzian assumption, it should be noted that the frequency response $H(f)$ has an inverse-triangular shape, and thus is high pass. Furthermore, the magnitude of the walk-off value $\Delta$ is linearly proportional to the magnitude of the Rx chromatic dispersion. Hence, the power spectral density of the EEPN, $E\{|H(f)|^2\}$, grows linearly with the magnitude of the Rx chromatic dispersion.

To estimate the speed of change of $f_t(t)$, consider the phase at the maximum time offset relative to the common phase (approximated by $\theta(t)$) for a single pair of terms:

$$\theta\left(t + \Delta \cdot \frac{F_s}{2}\right) - \theta(t)$$

Based on the Lorentzian assumption, the autocorrelation of $\theta(t + \tau) - \theta(t) = 2\pi \cdot \Lambda v \cdot |t - \tau|$. Further, the autocorrelation of $\theta(t + \tau) - \theta(t)$ with $\theta(\tau) - \theta(0)$ is proportional to the length of the intersection of the two intervals $[0, \tau]$ and $[t, t + \tau]$. Note that the autocorrelation function of higher frequency noise terms is also wider. That is, the autocorrelation function of the EEPN at frequency $f$ is non-zero for $t \le \Delta \cdot f$. In the case of a laser linewidth, Av, that is less than several megaHertz (MHz), the time

shift $\tau$ is much less than the laser autocorrelation time, $\Delta \cdot \frac{F_s}{2} \ll \frac{1}{\Lambda \nu}$. Thus, rather than performing uniform averaging, (e.g., optimum) coefficients can be computed to derive the (e.g., optimum) EEPN filter.

To determine the optimum filter taps, consider Rx chromatic dispersion compensation with the following frequency response:

$$H(f) = e^{j\beta_2 f^2}$$

The time domain impulse response can be determined by:

$$h(t) := IFFT\{H(f)\} = C \cdot e^{-j\frac{\pi^2 t^2}{\beta_2}} = C \cdot e^{j \cdot D \cdot t^2}$$

where $C$ and $D$ are constants that are independent of time $t$, and thus the response is only a function of $\beta_2$. Examples of fiber chromatic dispersion, $D$, where EEPN can be an issue, are 8 nanoseconds (ns) per nanometer (ns/nm) and 16 ns/nm. G.652 fiber, for instance, has a typical chromatic dispersion of 16 ps/nm per kilometer (km), and so fiber chromatic dispersion values of 8 ns/nm and 16 ns/nm would correspond to 500 km and 1000 km, respectively. The constant C originates from the inverse Fast Fourier Transform (IFFT) operation, but, as it is a fixed complex scaling, it can be ignored for brevity.

Let $w(z)$ represent the received signal prior to the Rx chromatic dispersion compensation. Because the Rx input signal $w(n)$ experiences a net optical chromatic dispersion value that is the negative of the chromatic dispersion value that is compensated at the Rx, we have:

$$w(n) = \sum_{k=-M}^{M} g(k) \cdot s(n - k)$$

where $g(k)$ is the impulse response of chromatic dispersion associated with the Tx and the channel. The Fourier transform of $g(k)$ is the conjugate of the Fourier transform of the Rx chromatic dispersion compensation, and thus we have:

$$w(n) = \sum_{k=-M}^{M} e^{-j \cdot D \cdot k^2} \cdot s(n - k)$$

Because $w(n)$ is multiplied by the Rx laser phase noise $e^{j(\theta(n-k)-\theta_C(n))}$ prior to the Rx digital chromatic dispersion compensation, the received signal at the output of the chromatic dispersion compensation can be calculated as follows:

$$r(n) = \sum_{k=-M}^{M} h(k) \cdot \left[ w(n - k) \cdot e^{j(\theta(n-k)-\theta_C(n))} \right]$$

The Taylor series can be used to approximate the carrier phase recovery correction term (on the assumption that it removes the common phase $\theta(n)$ corresponding to symbol $r(n)$) to yield the following error signal:

$$\delta(n) \approx j \cdot |C|^2 \cdot \sum_{k=-M}^{M} e^{j \cdot D \cdot k^2} \left[ \sum_{l=-M}^{M} e^{-j \cdot D \cdot l^2} \cdot s(n - k - l) \right] \cdot (\theta(n - k) - \theta(n))$$

$$= j \cdot |C|^2 \cdot \sum_{k=-M}^{M} (\theta(n - k) - \theta(n)) \cdot \sum_{l=-M}^{M} e^{j \cdot D \cdot (k^2 - l^2)} \cdot s(n - k - l)$$

The Lorentzian phase noise distribution property implies that:

$$\theta(n - k) - \theta(n) = -sign(k) \cdot \zeta_{q=0}^{k-1}\big(\varphi(n - q)\big)$$

where the operator $\zeta$ is defined as:

$$\zeta_{x=l}^{u} f(x) := \sum_{x=\min(l,u)}^{\max(l,u)} f(x)$$

and where $\varphi(n) = \theta(n) - \theta(n - 1)$ is the independent Lorentzian frequency noise. Furthermore, $sign(k)$ is the sign function, which is defined as:

$$sign(k) := \begin{cases} 1 \; if \; k > 0 \\ 0 \; if \; k = 0 \\ -1 \; if \; k < 0 \end{cases}$$

Letting $t = k - l$, where $k$ increases in the summation, yields:

$$\delta(n) \approx \sum_{t=-2M}^{2M} s(n - t) \cdot j \cdot |C|^2$$

$$\cdot \sum_{k=\max(-M,t-M)}^{\min(M,t+M)} e^{j \cdot D \cdot (2k-t)t} \left(-sign(k) \cdot \zeta_{q=0}^{k-1}\big(\varphi(n - q)\big)\right)$$

Let $\hat{f}_n(t)$ represent the ideal or optimum EEPN filter taps as follows:

$$\hat{f}_n(t) := j \cdot |C|^2 \cdot \sum_{k=\max(-M,t-M)}^{\min(M,t+M)} \left[-sign(k) \cdot e^{j \cdot D \cdot (2k-t)t} \cdot \zeta_{q=0}^{k-1}\big(\varphi(n - q)\big)\right]$$

This then yields:

$$\delta(n) \approx \sum_{t=-2M}^{2M} s(n - t) \cdot \hat{f}_n(t)$$

Reordering the two summations in $\hat{f}_n(t)$ results in a pair of geometric series in $k$ that can be calculated as:

$$Geometric(t, q)$$

$$= -e^{-j \cdot D \cdot t^2} \cdot sign(q + 1) \cdot e^{j \cdot 2D \cdot t \cdot (q+1)} \cdot \frac{e^{j \cdot 2D \cdot t \cdot ((M+1) \cdot sign(q+1)-q-1)} - 1}{e^{j \cdot 2D \cdot t \cdot sign(q+1)} - 1}$$

This yields:

$$\frac{\hat{f}_n(t)}{-j \cdot |C|^2} := \sum_{q=\max(-M,t-M)-1}^{\min(M,t+M)-1} \varphi(n - q) \cdot Geometric(t, q)$$

where the autocorrelation function of $\hat{f}_n(t)$ can be calculated as follows:

$$\frac{E\{\hat{f}_n(t)\hat{f}^*_{n+\tau}(t)\}}{C^4}$$

$$= E\left[\sum_{q=\max(-M,t-M)-1}^{\min(M,t+M)-1} \varphi(n-q) \cdot Geometric(t,q)\right]$$

$$\cdot \left[\sum_{p=\max(-M,t-M)-1}^{\min(M,t+M)-1} \varphi^*(n+\tau-p) \cdot Geometric(t,p)^*\right]$$

$$= \sum_{q=\max(-M,t-M)-1}^{\min(M,t+M)-1} \sum_{p=\max(-M,t-M)-1}^{\min(M,t+M)-1} E[\varphi(n-q) \cdot \varphi^*(n+\tau-p) \cdot Geometric(t,q)$$

$$\cdot Geometric(t,p)^*]$$

Given that the phase noise is ergodic and independent (i.e., its statistical properties are generally consistent over time, and it is not correlated with itself at different time points), we can define:

$$P_\varphi := E[\varphi(n) \cdot \varphi^*(n)]$$

and thus arrive at:

$$\frac{E\{\hat{f}_n(t)\hat{f}^*_{n+\tau}(t)\}}{P_\varphi C^4}$$

$$= \sum_{q=\max(-M,t-M)-1+\max(0,-\tau)}^{\min(M,t+M)-1+\min(0,-\tau)} [Geometric(t,q) \cdot Geometric(t,q$$

$$+ \tau)^*]$$

The following deductions can be made from the autocorrelation:

- filter tap power $E\{|f_t(n)|^2\}$ scales linearly with chromatic dispersion

- $Angle(E\{f_t(n)f^*_{t+\tau}(n)\})$ scales linearly with lag $\tau$

- $\frac{\partial}{\partial \tau} Angle(E\{f_t(n)f^*_{t+\tau}(n)\})$ scales linearly with filter tap index "n"

- $\frac{\partial}{\partial \tau} Angle(E\{f_t(n)f^*_{t+\tau}(n)\})$ scales inversely proportionally with chromatic dispersion (i.e., K/D)

- 

$$Angle(E\{f_t(n)f^*_{t+\tau}(n)\}) = \alpha \cdot \frac{\tau \cdot n}{Dispersion[\# \ of \ taps]}$$

- The lag $\tau$ for a 50% fall-off of $E\{f_t(n)f^*_{t+\tau}(n)\}$ is substantially equal, for example within a factor of two, to the delay that is experienced by the higher frequency components of the signal (e.g., for a 250 GBaud signal, wavelengths that are about 1 nm away from the carrier, depending upon the central wavelength that is used) due to the Rx chromatic dispersion compensation. That is, the autocorrelation (or correlation) time of a given coefficient of the EEPN filter is substantially equal to a relative delay that is associated with the Rx chromatic dispersion compensation. The delay can be relative in that it can be the magnitude of the difference in delay experienced by some frequency components of the signal and that experienced by other frequency components. As some examples, the delay of outer frequency components relative to components at the carrier frequency (f=0) may be between 0.5 and 2 ns, between 2 and 8 ns, or between 8 and 32 ns. It is worth noting that the very fast rate of change in the EEPN filter coefficients (i.e., on the order of nanoseconds) is a consequence of the Rx chromatic dispersion compensation having an effect on the laser phase noise that is independent from one time interval to the next. Conventional EEPN compensation techniques focus on the slow changing characteristics of the Tx and Rx lasers. For a laser linewidth of, say, 15 kHz or 150 kHz or even 1 MHz, the filtering updates are merely on the order of microseconds, and thus fail to address the fast-changing effects of chromatic dispersion compensation on the laser phase noise. Indeed, unless filter coefficients are updated frequently enough (at the nanosecond level) to track such fast-changing effects, the coefficients would quickly become obsolete.

- The lag $\tau$ for a 50% fall-off of $E\{f_t(n)f_{t+\tau}^*(n)\}$ is substantially equal, for example within a factor of two, to the width of the impulse response of the linear filter that is or that corresponds to the Rx chromatic dispersion compensation.

The optimum Wiener filter response can be calculated by cross-correlating the input signal (in this case, $\delta(n)$) with the target signal (in this case, $f_n(t)$). Given the autocorrelation function $f_n(t)$ calculated above, we have:

$$R_{\delta,f}(\tau) := E\{f_n(t)\delta^*[n+\tau]\} = E\{f_n(t)f_{n+\tau}^*(t)\} \cdot E\{|s[n+\tau]|^2\}$$

$$= P_X \cdot E\{f_n(t)f_{n+\tau}^*(t)\}$$

Assuming a "2M+1"-tap Wiener filter, the following (2M+1) x 1 vector can be generated:

$$\overline{r}_{\delta,f} := \left[R_{\delta,f}(-M, -M+1, \dots, M)\right]^T$$

Because the EEPN filter contribution is much smaller than the additive background ASE noise, i.e.,

$$E\{|\delta[n]|^2\} \gg E\{|f_n(t)|^2\} \cdot P_X,$$

the autocorrelation function of the Wiener filter input $\delta(n)$ can be approximated by a Dirac delta function with a peak value of $E\{|\delta[n]|^2\}$, which simplifies the calculation of the Toeplitz correlation matrix of $\delta[n]$. $R_\delta$ can be approximated by an identity function multiplied by a scalar that is equal to $E\{|\delta[n]|^2\}$, and thus the Wiener filter can be calculated as follows:

$$W(n) := R_\delta^{-1} \cdot \overline{r}_{\delta,f} \approx \frac{1}{E\{|\delta[n]|^2\}}\overline{r}_{\delta,f}$$

The Wiener filter response can further be normalized as follows to avoid any loss of scaling in the calculation:

$$W(n) := \left(\sum_{m=-M}^{M} |W(m)|^2\right)^{-1} \cdot W(n)$$

This equation guarantees that the Wiener filter has a DC-response of "1." In an example calculation of the optimum FIR, for a 250 Gbaud signal and 40 ns per nm of chromatic dispersion, the taps were determined to be 4 picoseconds (ps) apart, and thus 1000 taps spanned 4 ns.

Given the triangular, high pass spectral shape of the EEPN filter $f_t(\tau)$, the finite impulse response (FIR) taps that are only a few samples away from zero will have the greatest effect in approximating $f_t(\tau)$. The power in the taps is about $1/\tau^2$. Having more taps will help to define the particular shape.

In the derivation discussed above, the following was assumed for the sake of simplicity:

$$R_X(f) = S_X(f) \cdot e^{j(\theta(t+\Delta \cdot f)-\theta_C(t))}$$

However, after Rx LMS filtering, such as via Wiener filtering (which is distinct from the optimum Wiener filtering described above with respect to the EEPN filter), there will generally be a residual effect of the LMS filter in the presence of zero-mean additive Gaussian noise $Z(f)$. Letting the variance of $Z(f)$ be $N1(f)$, we have:

$$R_X(f) = \frac{S_X(f) \cdot e^{j(\theta(t+\Delta \cdot f)-\theta_C(t))} + Z(f)}{1 + \frac{N1(f)}{|S_X(f)|^2}}$$

The time domain EEPN tracking algorithm attempts to undo that residual effect by forming a zero-forcing filter. Of course, if the SNR is high (i.e., weak FEC), if $N1(f) \ll |S_X(f)|^2$, or if the noise is also fairly white after T-spaced sampling, then the undo effect will be small. Where the undo effect is large, it can form a floor on the amount of improvement that the FIR filter can provide. At the cost of further circuitry, this undo effect can be partially or fully eliminated using measurements or knowledge of the expected values of $N1(f)$ and $|S_X(f)|^2$.

As demonstrated above, the EEPN impairment manifests itself in the time domain as a convolution with a time-varying complex filter $f_t(t)$ that is oddly conjugate symmetric $[f_t(-t) = -f_t^*(t)]$, that is zero at tap 0 $[f_t(0) = 0]$, and that is high-pass (with a power spectral density that is proportional to $|\Delta|$ and the laser linewidth). The time variation of the filter coefficients, as derived above, is on the order of nanoseconds, which can be hundreds or thousands of symbols. Based on the derivation above, the actual input signal can be well approximated by:

$$r_X(t) \approx s_X(t) + z(t) + \sum_{\tau=1}^{M} [f_t(\tau) \cdot s_X(t-\tau) - f_t^*(\tau) \cdot s_X(t+\tau)]$$

where $M$ is the number of one-sided taps of $f(\tau)$, and $z(t)$ is the zero-mean additive white Gaussian noise (such as ASE).

Using 16-QAM modulation as an example, a hard-decision decoding of the input signal can be applied as follows:

$$\hat{s}_X(t) := Decode(r_X(t))$$

Assuming no decision error (or only a moderate level of symbol errors, such as 1% or 2%), $\hat{s}_{X,Y}(t) = s_{X,Y}(t)$. Furthermore, $\hat{s}_{X,Y}(t)$ can be represented by 2-bit integer values since the underlying modulation on each real dimension is a 4-pulse amplitude modulation (PAM) constellation. Given the calculated hard-decision value, the estimate of the error signal can be calculated as follows:

$$\hat{e}_{X,Y}(t) = r_{X,Y}(t) - \hat{s}_{X,Y}(t) \approx z_X(t) + \sum_{\tau=-M}^{M} f_t(\tau) \cdot s_X(t-\tau)$$

The estimated error signal can be cross-correlated with the hard-decoded values to calculate the EEPN filter taps $f(\tau)$ as follows:

$$Expected\ Value\ of: \hat{e}_X(t) \cdot \hat{s}_X^*(t - \tau) + \hat{e}_Y(t) \cdot \hat{s}_Y^*(t - \tau)$$

$$\approx E\{\sum_{l=t-L}^{t+L} \left( z_X(l) + \sum_{\tau'=-M}^{M} f_t(\tau') \cdot s_X(l - \tau') \right) \cdot \hat{s}_X^*(l - \tau)$$

$$+ \left( z_Y(l) + \sum_{\tau'=-M}^{M} f_t(\tau') \cdot s_Y(l - \tau') \right) \cdot \hat{s}_Y^*(l - \tau)\}$$

$$\approx \sum_{\tau'=-M}^{M} (2L + 1) \cdot f_t(\tau')$$

$$\cdot (E\{s_X(t - \tau') \cdot s_X^*(t - \tau)\} + E\{s_Y(t - \tau') \cdot s_Y^*(t - \tau)\})$$

$$\approx (2L + 1) \cdot 2 \cdot f_t(\tau) \cdot E\{|s_X(t)|^2\}$$

$$= (2L + 1) \cdot 2 \cdot P_X \cdot f_t(\tau)$$

It is assumed, for brevity, that the transmitted symbol sequence $s_X(t)$ is independent in time and across polarizations. $P_X$ is the transmitted signal power per polarization, and $2L + 1$ symbols are used to average the EEPN estimation, where a larger value of L provides better accuracy for the EEPN estimation, while a smaller value of $L$ provides faster tracking of the evolution of EEPN over time.

In sum, the EEPN filter taps can be calculated as follows:

$$f_t(\tau) := \frac{1}{(2L + 1) \cdot 2 \cdot P_X} \cdot \sum_{l=t-L}^{t+L} \hat{e}_X(l) \cdot \hat{s}_X^*(l - \tau) + \hat{e}_Y(l) \cdot \hat{s}_Y^*(l - \tau)$$

It will be appreciated that this calculation can be implemented in hardware with a fairly small number of gates dissipating a fairly small amount of heat since the multiplication is of the heavily clipped error signal by 2-bit hard-decoded values $\hat{s}_X^*(t - \tau)$ and $\hat{s}_Y^*(t - \tau)$. The above implementation applies a simple rectangular averaging over $2L + 1$ symbols. In practice, a weighted averaging of cross-correlation across some number of samples may instead be applied as follows:

$$f_t(\tau) := \frac{1}{(2L + 1) \cdot 2 \cdot P_X} \cdot \sum_{l=t-L}^{t+L} w(l - t) \cdot \left( \hat{e}_X(l) \cdot \hat{s}_X^*(l - \tau) + \hat{e}_Y(l) \cdot \hat{s}_Y^*(l - \tau) \right)$$

where w(m) is a weighting function whose tap values can also be calculated from the Wiener filter solution or can be defined to well-known shapes (such as a triangular shape). In some embodiments, rather than correlating the error estimate (i.e., $\hat{e}_X(l)$) with estimates of transmitted symbols corresponding to neighboring samples (i.e., $\hat{s}_X^*(l - \tau)$), the error estimate can alternatively be cross-correlated with the neighboring received samples $r_X^*(l - \tau)$. In these embodiments, the EEPN filter taps can be calculated as follows:

$$f_t(\tau) := \frac{1}{(2L + 1) \cdot 2 \cdot P_X} \cdot \sum_{l=t-L}^{t+L} w(l - t) \cdot \left( \hat{e}_X(l) \cdot r_X^*(l - \tau) + \hat{e}_Y(l) \cdot r_Y^*(l - \tau) \right)$$

Of course, implementing such a cross-correlation function would require more gates since higher resolution received values, i.e., $r_X(l - \tau)$, $r_Y(l - \tau)$, are being cross-correlated rather than mere 2-bit transmitted symbol estimates (i.e., $\hat{s}_X^*(l - \tau)$). In certain other embodiments, received values may be cross-correlated with the transmitted estimates of neighboring samples as follows:

$$f_t(\tau) := \frac{1}{(2L+1) \cdot 2 \cdot P_X} \cdot \sum_{l=t-L}^{t+L} w(l-t) \cdot \left( r_X(l) \cdot \hat{s}_X^*(l-\tau) + r_Y(l) \cdot \hat{s}_Y^*(l-\tau) \right)$$

This implementation of the EEPN estimator function would suffer from higher background noise as compared to the above-described implementation in which the error estimate is cross-correlated with the estimate of transmitted symbols of neighboring samples.

Exploiting the conjugate property of the EEPN filter by averaging tap values $\tau$ and $-\tau$,

$$f_t(\tau) := 0.5 \cdot \left( f_t(\tau) - f_t^*(-\tau) \right)$$

and given an estimate of the filter taps, the EEPN correction $\tilde{e}_X(t)$ can be estimated by filtering the hard-decoded values through the derived filter $f_t(\tau)$ as follows:

$$\tilde{e}_X(t) := \sum_{\tau=1}^{M} real\big(f_t(\tau)\big) \cdot \big( \hat{s}_X(t-\tau) - \hat{s}_X(t+\tau) \big) + j \cdot imag\big(f_t(\tau)\big)$$

$$\cdot \big( \hat{s}_X(t-\tau) + \hat{s}_X(t+\tau) \big)$$

where $real(x)$ and $imag(x)$ are the real and imaginary projections of a complex input $x$, respectively, and j is the pure imaginary unit value that is equal to the square root of -1, i.e. $j := \sqrt{-1}$. Exploiting the conjugate property of the filter allows for the number of multiplies to be reduced by a factor of two. The received values can then be corrected using the estimated EEPN error term as follows:

$$\hat{r}_X(t) := r_X(t) - \tilde{e}_X(t)$$

$$\hat{r}_Y(t) := r_Y(t) - \tilde{e}_Y(t)$$

FIG. 3A is a high-level block diagram of an example time domain EEPN tracker circuit 250', in accordance with various aspects described herein. The time domain EEPN tracker circuit 250' may include a first decoder 250f, a filter calculation block 250n, a filter 250r, a $\rho$-symbol buffer 250b, and a subtraction block 250c. The time domain EEPN tracker circuit 250' may perform EEPN tracking for every $L$ new samples, where $L$ is the update rate of the tracking-e.g., $L$~256 or $L$~1024.

The first decoder 250f may receive an input $r_{X,Y}(t)$ from a clock phase recovery block, and may perform a simple decoding (e.g., a hard-decision one-dimensional decoding) thereof to arrive at decoded values $\hat{s}_{X,Y}(t)$. For example, new samples may be fetched for the l'th iteration of the first decode operation, which may generate 2-bit hard-decoded values:

$$\forall t \mid L \cdot l \leq t < L \cdot (l+1): \ \hat{s}_{X,Y}(t) := Decode\left( r_{X,Y}(t) \right)$$

The $\rho$-symbol buffer 250b may also receive the input $r_{X,Y}(t)$, and may delay the output of the input $r_{X,Y}(t)$ by $\rho$ symbols-i.e., $r_{X,Y}(t-\rho)$, for use in a later EEPN compensation operation. The value of $\rho$ may be chosen based on the amount of time that the first decoder 250f, the filter calculation 250n, and the filter 250r takes to perform their respective calculations (which might be non-causal). For example, $\rho$ can be an integer number of hardware clock periods such as 4 cycles of a ~1 ns clock period.

The first decoder 250f may further estimate the error signal $\hat{e}_{X,Y}(t)$ based on the input $r_{X,Y}(t)$ and the decoded values $\hat{s}_{X,Y}(t)$:

$$\forall t \mid L \cdot l \leq t < L \cdot (l+1): \ e_{X,Y}(t) := r_{X,Y}(t) - \hat{s}_{X,Y}(t)$$

The filter calculation block 250n may correlate the error signal $e_{X,Y}(t)$ with the decoded values $\hat{s}_{X,Y}(t)$ to derive the EEPN filter taps $f(\tau)$:

$$\forall \tau \mid -M \leq \tau \leq M, \tau \neq 0: f(\tau)$$

$$:= \frac{1}{2 \cdot L \cdot P_X} \sum_{t=l \cdot L}^{(l+1) \cdot L-1} e_X(t) \cdot \hat{s}_X^*(t-\tau) + e_Y(t) \cdot \hat{s}_Y^*(t-\tau)$$

In one or more embodiments, the filter calculation block 250n may cross-correlate the error estimate with the neighboring received samples (albeit at the expense of higher resolution multiplication):

$$\forall \tau \mid -M \leq \tau \leq M, \tau \neq 0: f(\tau)$$

$$:= \frac{1}{2 \cdot L \cdot P_X} \sum_{t=l \cdot L}^{(l+1) \cdot L-1} e_X(t) \cdot r_X^*(t-\tau) + e_Y(t) \cdot r_Y^*(t-\tau)$$

In one or more embodiments, the filter calculation block 250n may cross-correlate received values with the estimates of transmitted symbols corresponding to neighboring received samples (albeit at the expense of higher background noise in the EEPN filter estimation):

$$\forall \tau \mid -M \leq \tau \leq M, \tau \neq 0: f(\tau)$$

$$:= \frac{1}{2 \cdot L \cdot P_X} \sum_{t=l \cdot L}^{(l+1) \cdot L-1} r_X(t) \cdot \hat{s}_X^*(t-\tau) + r_Y(t) \cdot \hat{s}_Y^*(t-\tau)$$

In one or more embodiments, the filter calculation block 250n may force the conjugate symmetry property:

$$\forall \tau \mid 1 \leq \tau \leq M: \hat{f}(\tau) := 0.5 \cdot \left( f(\tau) - f^*(-\tau) \right)$$

The EEPN filter taps $f(\tau)$ may then be applied to the filter 250r to be convolved with the decoded values $\hat{s}_{X,Y}(t)$ to derive the EEPN correction estimate $\delta_{X,Y}(t)$:

$$\forall t \mid L \cdot l \leq t < L \cdot (l+1): \ \delta_{X,Y}(t)$$

$$:= \sum_{\tau=1}^{M} real\left(\hat{f}(\tau)\right) \cdot \left(\hat{s}_{X,Y}(t-\tau) - \hat{s}_{X,Y}(t+\tau)\right) + j \cdot imag\left(\hat{f}(\tau)\right)$$

$$\cdot \left(\hat{s}_{X,Y}(t-\tau) + \hat{s}_{X,Y}(t+\tau)\right)$$

In one or more embodiments, EEPN correction estimates can be calculated by filtering the received signal rather than estimates of the transmitted signal, as follows:

$$\forall t \mid L \cdot l \leq t < L \cdot (l+1): \ \delta_{X,Y}(t)$$

$$:= \sum_{\tau=1}^{M} real\left(\hat{f}(\tau)\right) \cdot \left(r_{X,Y}(t-\tau) - r_{X,Y}(t+\tau)\right) + j \cdot imag\left(\hat{f}(\tau)\right)$$

$$\cdot \left(r_{X,Y}(t-\tau) + r_{X,Y}(t+\tau)\right)$$

Implementing the EEPN filter in this manner would require higher resolution multiplication operations, and thus more gates (i.e., higher hardware costs).

In any case, the EEPN correction estimate $\delta_{X,Y}(t)$ would be delayed by $\rho$ symbols-i.e., $\delta_{X,Y}(t - \rho)$-by virtue of the time that is taken by the first decoder 250f, the filter calculation 250n, and the filter 250r to perform the above-described operations. The subtraction block 250c may then subtract the EEPN correction estimate from the delayed input $r_{X,Y}(t - \rho)$ to provide an EEPN compensated signal $\hat{r}_{X,Y}(t - \rho)$:

$$\forall t|\ L \cdot l \leq t < L \cdot (l + 1):\ \hat{r}_{X,Y}(t - \rho) := r_{X,Y}(t - \rho) - \delta_{X,Y}(t - \rho)$$

which can then be provided to a second decoder (e.g., for maximum-likelihood multi-dimensional soft decoding that might incorporate unequal apriori symbol probabilities).

It is to be understood and appreciated that above-described derivation of the time domain EEPN tracking algorithm relies on simplified assumptions for purposes of brevity and clarity. In practice, numerous variations are possible and thus aspects of the tracking algorithm may be adapted accordingly. For instance, while a linear T-spaced FIR is described, infinite impulse response (IIR) filters can alternatively be used, nonlinear compensation functions can alternatively be employed, and/or fractional sampling (e.g., T/2 spaced) can alternatively be performed.

Time domain methods are advantageous for low latency and low heat given short FIR lengths. However, frequency domain methods can alternatively be used. To achieve the desired, short coefficient correlation times, feed-forward compensation is advantageous. However, feedback or other control structures can alternatively be used.

At moderate SNRs, e.g., corresponding to <1% symbol decoding errors, the compensation coefficients of the EEPN filter can be estimated from an error signal that is produced by a simple first decoding. However, Maximum-likelihood decoding, turbo decoding, chain decoding, and/or other approximate or more subtle decoding methods can alternatively be used to estimate the coefficients, especially in cases of lower SNRs. The same hardware can be used for the first and the second decoding, e.g., in a time interleaved manner. In one or more embodiments, the compensation can be implemented as part of an iterative turbo-decoding loop.

The use of unshaped, uniform 16-QAM is discussed above. However, other modulation techniques, such as QPSK, Binary Phase Shift Keying (BPSK), 64-QAM, probabilistic shaping, etc., can alternatively be used.

For the sake of simplicity, EEPN compensation is described above as involving the subtraction of complex values from the received signal-i.e., $\hat{r}_X(t) := r_X(t) - \tilde{e}_X(t)$ and $\hat{r}_Y(t) := r_Y(t) - \tilde{e}_Y(t)$. However, polarization-dependent Jones matrix values (including real and imaginary values as separate terms of a matrix rather than complex) can alternatively be used. Also, while linear averaging of the correlation between the error signal and the data signal is described above, other filtering techniques (e.g., FIR or IIR, causal or non-causal, linear or nonlinear) can alternatively be used. Further, recursive least squares (RLS) or other tracking methods can alternatively be used. Equivalent or approximate formulations can alternatively be used to implement the algorithm. For instance, rather than subtracting a compensation, the subtraction can alternatively be implemented in the FIR-i.e., by having a center tap of unity and flipping the signs of the FIR.

While the method has been described as an EEPN compensator that involves measuring correlations between the data and an error signal (essentially identifying ISI due to EEPN), it can be combined with one or more other functions, such as the brightening filter discussed above with respect to the '599 patent that focuses on reducing the variance of additive noise via filtering of an error signal. For instance, the EEPN compensation method described herein can be implemented in conjunction with the first decoder and subtraction block of the brightening filter (see 310, 314 in Figure 3 of the '599 patent), where a copy of the error signal 316 therein can be split off into the EEPN compensation function (e.g., filter calculation block 250n of **FIG. 3A** herein). In this way, the brightening filter system can share the error calculation circuit that is used for EEPN compensation, before the error signal is split off for distinct calculations of noise correlations. This can advantageously reduce the number of gates that are needed for the various filtering, and thus conserve power resources and reduce heat dissipation.

The above-described symmetry of $f_t(-t) = -f_t^*(t)$ can be exploited to reduce the number of multiply operations in the FIR and thus double the speed of the averaging. However, residual Tx hardware degradations can advantageously be compensated by relaxing the negative conjugate constraint, and by making the filter 2x2 real rather than complex. Since such degradations would vary slowly over time, such as due to temperature change in the Tx hardware, those coefficients which are additive to the negative-conjugate complex sub-space can have much slower filtering so as to reduce the coefficient noise. In other words, other Tx degradations, such as I/Q nonorthogonality, etc. can be detected using the same correlation. The other symmetry (negative conjugate) can be used to create FIR terms for correcting other degradations, e.g.: $g_t(-t) = +g_t^*(t)$. Rather than being analytic (where multiplication by a complex value equally affects both real and imaginary parts), $g_t(t)$ can be 2x2 real (where the real and imaginary dimensions can be affected differently), with the EEPN symmetry term removed, which allows for the correction of Tx analog electrical effects that are not analytic. As these degradation effects change more slowly than EEPN (e.g., in seconds or even minutes rather than in nanoseconds), more averaging can be used in estimating $g_t(t)$. In one or more embodiments, a filter coefficient relating to the slower filtering for Tx impairment(s) may have a much longer correlation time versus that of a filter coefficient relating to EEPN compensation. For example, the correlation time of a Tx impairment-related filter coefficient may be at least 1000 times greater than the correlation time of an EEPN-related filter coefficient. Further, a different number of taps can be chosen for the $g_t(t)$ FIR. In a case where a Tx equalizer is implemented (with the use of pilots and slow training) to correct for small errors relating to Tx I/Q imbalance, skew, and/or quadrature error, the Tx equalizer may be upstream of the first decoder 250f, to reduce decision errors, may be in parallel with the EEPN compensation for circuit size and latency efficiency, or may be downstream of the EEPN compensation.

A pulse width of a linear filter might be defined as the full width of the shortest interval where the magnitude of the impulse response outside of that interval is less than 1/sqrt(2). In power terms, this is the 50% or -3 dB full width. Other reasonable metrics, however, can alternatively be used (e.g., 1/e, etc.) for the EEPN filtering. The correlation time of a coefficient of a filter might be defined as the magnitude of the shortest time offset where the correlation of a first coefficient with any second coefficient that is outside of that offset is less than 50%. Again, other reasonable metrics can alternatively be used.

It is to be understood and appreciated that, although one or more of **FIGs. 1A-1C, 2,** and **3A** might be described above as pertaining to various processes and/or actions that are performed in a particular order, some of these processes and/or actions may occur in different orders and/or concurrently with other processes and/or actions from what is depicted and described above. Moreover, not all of these processes and/or actions may be required to implement the systems and/or methods described herein. Furthermore, while various components, devices, systems, modules, circuits, etc. may have been illustrated in one or more of **FIGs. 1A-1C, 2,** and **3A** as separate components, devices, systems, modules, circuits, etc., it will be appreciated that multiple components, devices, systems, modules, circuits, etc. can be implemented as a single component, device, system, module, circuit, etc., or a single component, device, system, module, circuit, etc. can be implemented as multiple components, devices, systems, modules, circuits, etc. Additionally, functions described as being performed by one component, device, system, module, circuit, etc. may be performed by multiple components, devices, systems, modules, circuits, etc., or functions described as being performed by multiple components, devices, systems, modules, circuits, etc. may be performed by a single component, device, system, module, circuit, etc.

**FIG. 4A** depicts an illustrative embodiment of a method 410 in accordance with various aspects described herein.

At 410a, the method can include calculating, by an EEPN compensation system of a coherent optical receiver, at least one metric, wherein the coherent optical receiver includes a chromatic dispersion compensation system configured to digitally compensate for chromatic dispersion relating to a signal, and a carrier phase recovery system configured to digitally recover a carrier phase associated with the signal, and wherein the calculating is based on information that is downstream of the chromatic dispersion compensation system. For example, the EEPN tracker/compensator 250e of a coherent optical receiver, such as the receiver 4', may, similar to that described above with respect to **FIG. 2,** perform one or more operations that include calculating at least one metric relating to clock phase, where the receiver 4' includes a chromatic dispersion compensation system configured to digitally compensate for chromatic dispersion relating to a signal, and a carrier phase recovery system configured to digitally recover a carrier phase associated with the signal, and where the calculating is based on information that is downstream of the chromatic dispersion compensation system.

At 410b, the method can include utilizing, by the EEPN compensation system, the at least one metric to perform EEPN compensation relating to the signal upstream of the carrier phase recovery system. For example, the EEPN tracker/compensator 250e may, similar to that described above with respect to **FIG. 2,** perform one or more operations that include utilizing the at least one metric to perform EEPN compensation relating to the signal upstream of the carrier phase recovery system.

While for purposes of simplicity of explanation, the respective processes are shown and described as a series of blocks in **FIG. 4A,** it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methods described herein.

**FIG. 4B** depicts an illustrative embodiment of a method 420 in accordance with various aspects described herein.

At 420a, the method can include generating an error estimate based on information from a carrier phase recovery system that digitally recovers a carrier phase associated with a signal. For example, the time domain EEPN tracker circuit 250' may, similar to that described above with respect to **FIG. 3A,** perform one or more operations that include generating, e.g., using the first decoder 250f, an error estimate based on information from a carrier phase recovery system that digitally recovers a carrier phase associated with a signal.

At 420b, the method can include deriving filter coefficients based on the error estimate. For example, the time domain EEPN tracker circuit 250' may, similar to that described above with respect to **FIG. 3A,** perform one or more operations that include deriving, e.g., using the filter calculation block 250n, filter coefficients based on the error estimate.

At 420c, the method can include using the filter coefficients to perform EEPN compensation relating to the signal, wherein a correlation time of at least one of the filter coefficients is substantially equal to a relative delay associated with digital compensation of chromatic dispersion relating to the signal. For example, the time domain EEPN tracker circuit 250' may, similar to that described above with respect to **FIG. 3A,** perform one or more operations that include using the filter coefficients, e.g., in the filter 250r, to perform EEPN compensation relating to the signal, wherein a correlation time of at least one of the filter coefficients is substantially equal to a relative delay associated with digital compensation of chromatic dispersion relating to the signal.

While for purposes of simplicity of explanation, the respective processes are shown and described as a series of blocks in **FIG. 4B,** it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methods described herein.

One or more aspects of the subject disclosure include a coherent optical receiver, comprising a decoder configured to generate an error estimate based on information from a carrier phase recovery system that digitally recovers a carrier phase associated with a signal, and an equalization enhanced phase noise (EEPN) compensation system configured to perform operations. The operations may include deriving filter coefficients based on the error estimate, and using the filter coefficients in an EEPN filter to perform EEPN compensation relating to the signal, wherein a correlation time of at least one of the filter coefficients is substantially equal to a relative delay associated with digital compensation of chromatic dispersion relating to the signal.

In one or more embodiments, the EEPN compensation results in a compensated signal that is provided to another decoder for decoding.

In one or more embodiments, the EEPN filter comprises a feed-forward finite impulse response (FIR) filter. In some embodiments, the at least one of the filter coefficients comprises a tap weight of the feed-forward FIR filter, and the correlation time comprises a 50% autocorrelation time of the tap weight. In some embodiments, the feedforward FIR filter comprises two positive-time taps and two negative-time taps that are minus conjugates of respective ones of the two positive-time taps. In some embodiments, the deriving involves cross-correlation of the error estimate with neighboring received samples. In some embodiments, the deriving involves cross-correlation of the error estimate with estimates of transmitted symbols corresponding to neighboring received samples. In some embodiments, the feed-forward FIR filter is applied over a sequence of transmitted symbol estimates. In some embodiments, the feed-forward FIR filter is applied over a sequence of received symbols.

In one or more embodiments, the relative delay comprises a delay difference between digital compensation of chromatic dispersion relating to components of the signal that are closer to a first frequency and digital compensation of chromatic dispersion relating to components of the signal that are closer to a second frequency.

In one or more embodiments, the relative delay is between 0.5 and 2 ns.

In one or more embodiments, the relative delay is between 2 and 8 ns.

In one or more embodiments, the relative delay is between 8 and 32 ns.

In one or more embodiments, the correlation time is within a factor of two of the relative delay.

In one or more embodiments, the correlation time is substantially equal to a width of an impulse response of a filter corresponding to the digital compensation of chromatic dispersion.

In one or more embodiments, the deriving involves a filtered cross-correlation operation.

In one or more embodiments, at least another one of the filter coefficients relates to filtering for a transmitter (Tx) impairment, and a correlation time of the at least another one of the filter coefficients is at least 1000 times greater than the correlation time of the at least one of the filter coefficients.

One or more aspects of the subject disclosure include a method, comprising generating, by a processing system including a processor, an error estimate based on information from a carrier phase recovery system that digitally recovers a carrier phase associated with a signal, deriving, by the processing system, filter coefficients based on the error estimate, and using, by the processing system, the filter coefficients to perform equalization enhanced phase noise (EEPN) compensation relating to the signal, wherein a correlation time of at least one of the filter coefficients is substantially equal to a relative delay associated with digital compensation of chromatic dispersion relating to the signal.

In one or more embodiments, the processing system comprises a feed-forward finite impulse response (FIR) filter.

One or more aspects of the subject disclosure include a non-transitory machine-readable medium, comprising executable instructions that, when executed by a processing system of a device including a processor, facilitate performance of operations. The operations may include generating an error estimate based on information from a carrier phase recovery system that digitally recovers a carrier phase associated with a signal, deriving filter coefficients based on the error estimate, and using the filter coefficients to perform equalization enhanced phase noise (EEPN) compensation relating to the signal, wherein a correlation time of at least one of the filter coefficients is substantially equal to a relative delay associated with digital compensation of chromatic dispersion relating to the signal.

As a brief recap of the above-described EEPN tracker, estimates of a set of EEPN filter taps may be obtained by cross correlating the noise on received symbols with a hard decision estimate of the transmit data. More specifically, letting $r_X(t)$ and $r_Y(t)$ be the received X- and Y-polarization symbols at time index $t$, we obtain estimates, $\hat{s}_X(t)$ and $\hat{s}_Y(t)$, of ideal transmit symbols using a low-complexity hard decision decoder. The noise on the received symbols may be calculated as:

$$\hat{e}_X(t) = r_X(t) - \hat{s}_X(t)$$

$$\hat{e}_Y(t) = r_Y(t) - \hat{s}_Y(t)$$

The EEPN filter tap weights, $f(\tau)$, may then be calculated in non-overlapping blocks of 2L + 1 symbols as:

$$f(\tau) = \frac{1}{(2L+1) \cdot 2 \cdot P_{XY}} \sum_{l=-L}^{L} \hat{e}_X(l) \cdot \hat{s}_X^*(l-\tau) + \hat{e}_Y(l) \cdot \hat{s}_Y^*(l-\tau)$$

where $P_{XY} = \frac{1}{2} \cdot (E\{|\hat{s}_X(t)|^2\} + E\{|\hat{s}_Y(t)|^2\})$ is the average energy of the ideal symbols, and E{...} is the expectation value. The noise caused by EEPN can then be estimated as:

$$\tilde{e}_X(t) = \sum_{\tau=1}^{M} \text{real}(f(\tau)) \cdot (\hat{s}_X(t-\tau) - \hat{s}_X(t+\tau)) + i \cdot \text{imag}(f(\tau))$$

$$\cdot (\hat{s}_X(t-\tau) + \hat{s}_X(t+\tau))$$

$$\tilde{e}_Y(t) = \sum_{\tau=1}^{M} \text{real}(f(\tau)) \cdot (\hat{s}_Y(t-\tau) - \hat{s}_Y(t+\tau)) + i \cdot \text{imag}(f(\tau))$$

$$\cdot (\hat{s}_Y(t-\tau) + \hat{s}_Y(t+\tau))$$

The estimated EEPN may then be subtracted from the received symbols as follows:

$$\tilde{r}_X(t) = r_X(t) - \tilde{e}_X(t)$$

$$\tilde{r}_Y(t) = r_Y(t) - \tilde{e}_Y(t)$$

to improve signal quality and reduce the decoded bit error rate.

The following is a description of contribution terms for improving receiver tolerance to XPM/XPolM generated by high-power OSCs, and more generally, for improving overall receiver tolerance to linear and/or nonlinear noise. A single "on-axis" tap, $f_{on}$, may be estimated for at least partially compensating for residual phase noise after carrier recovery (which can be caused by a variety of linear and/or nonlinear impairments). The calculation of the tap, $f_{on}$, may be analogous to the expressions discussed above in relation to the EEPN tracker:

$$f_{on} = \frac{1}{(2L+1) \cdot 2 \cdot P_{XY}} \cdot \left\{ \sum_{l=-L}^{L} \hat{e}_X(l) \cdot \hat{s}_X^*(l) + \hat{e}_Y(l) \cdot \hat{s}_Y^*(l) \right\}$$

Note that this calculation averages the contributions of the X and Y polarizations into a single result, with the assumption that the resulting taps on the X and Y polarizations are identical. Alternatively, the on-axis taps may be calculated independently for the X and Y polarizations as follows:

$$f_{X\,on} = \frac{1}{(2L+1) \cdot P_{XY}} \cdot \left\{ \sum_{l=-L}^{L} \hat{e}_X(l) \cdot \hat{s}_X^*(l) \right\}$$

$$f_{Y\,on} = \frac{1}{(2L+1)\cdot P_{XY}} \cdot \left\{ \sum_{l=-L}^{L} \hat{e}_Y(l) \cdot \hat{s}_Y^*(l) \right\}$$

The normalization factor $P_{XY}$ in either equation can instead be replaced with a polarization-specific normalization factor. For example, $P_X = E\{|\hat{s}_X(t)|^2\}$ can be used for $f_{Xon}$ and/or $P_Y = E\{|\hat{s}_Y(t)|^2\}$ can be used for $f_{Yon}$.

Additionally, a single, complex "off-axis" contribution, $f_{off}$, may be estimated for at least partially compensating for residual polarization cross-talk caused by the XPolM:

$$f_{off} = \frac{1}{(2L+1)\cdot 2\cdot P_{XY}} \sum_{l=-L}^{L} \hat{e}_X(l) \cdot \hat{s}_Y^*(l) - \hat{e}_Y^*(l) \cdot \hat{s}_X(l)$$

Note that this calculation averages the contributions of the X and Y polarizations into a single result, with the assumption that the resulting taps on the X and Y polarizations are conjugate anti-symmetric. Note that this calculation also includes conjugate-symmetric pairs $\hat{e}_X(l) \cdot \hat{s}_Y^*(l)$ and $\hat{e}_Y^*(l) \cdot \hat{s}_X(l)$ to reduce noise on the estimate. Also note that both $f_{on}$ and $f_{off}$ are single numerical values, as opposed to sets of tap weights as in the above-described EEPN tracker, which allows for low implementation complexity.

As with the on-axis taps, the off-axis taps may be calculated independently for the X and Y polarizations as follows:

$$f_{X\,off} = \frac{1}{(2L+1)\cdot P_{XY}} \sum_{l=-L}^{L} \hat{e}_X(l) \cdot \hat{s}_Y^*(l)$$

$$f_{Y\,off} = \frac{1}{(2L+1)\cdot P_{XY}} \sum_{l=-L}^{L} \hat{e}_Y(l) \cdot \hat{s}_X^*(l)$$

These off-axis taps typically exhibit negative conjugate symmetry. By writing the equations in this form, it can be established that $f_{X\,off} \approx -f_{Y\,off}^*$. This relationship enables the results from both polarizations to be averaged, for example as $f_{off} = \frac{f_{Xoff} - f_{Yoff}^*}{2}$, to produce a more robust and noise-resistant estimate of the off-axis tap. The primary motivation for this symmetry is thus to facilitate averaging across polarizations to improve the reliability of the tap estimation in the presence of noise. It is to be understood and appreciated, however, that explicit enforcement of this negative conjugate symmetry in the individual tap calculations is not technically required. Specifically, in a case where the 2×2 filter matrix in the filter implementation described below, i.e.,

$$\begin{bmatrix} f_{Xon} & f_{Xoff} \\ f_{Yoff} & f_{Yon} \end{bmatrix}$$

is used, independent on- and off-axis taps are applied to the estimated symbols.

The received symbols may then be modified according to the following:

$$\begin{pmatrix} \tilde{e}_X'(t) \\ \tilde{e}_Y'(t) \end{pmatrix} = \begin{pmatrix} f_{on} & f_{off} \\ -f_{off}^* & f_{on} \end{pmatrix} \begin{pmatrix} \hat{s}_X(t) \\ \hat{s}_Y(t) \end{pmatrix}$$

$$\tilde{e}_X'(t) = f_{on} \cdot \hat{s}_X(t) + f_{off} \cdot \hat{s}_Y(t)$$

$$\tilde{e}_Y'(t) = -f_{off}^* \cdot \hat{s}_X(t) + f_{on} \cdot \hat{s}_Y(t)$$

$$\tilde{r}_X(t) = r_X(t) - \tilde{e}_X(t) - \tilde{e}_X'(t)$$

$$\tilde{r}_Y(t) = r_Y(t) - \tilde{e}_Y(t) - \tilde{e}_Y'(t)$$

where $\tilde{e}_X(t)$ and $\tilde{e}_Y(t)$ are the correction factors provided by the above-described EEPN tracker algorithm. It should be noted that the on-axis components are both the same and are almost purely imaginary in the presence of residual phase noise. This is in stark contrast to Li's technique discussed above, which use purely real values for on-axis components; Li thus does not compensate for post-carrier recovery residual phase noise. Additionally, the off-axis components in exemplary embodiments have negative conjugate symmetry (and are thus complex values) which is expected if one polarization is "rotating into" another. Further, the matrix of tap weights is applied to estimated/decoded transmit symbols. This is in stark contrast to Li's technique discussed above, which applies a matrix of tap weights to actual received symbols. The on-axis and off-axis correction terms are linearly independent from each other as well as from the above-described EEPN tracker algorithm. As a result, each of these terms-on-axis, off-axis, and EEPN tracker-can be calculated separately and independently, provided that all terms are derived from the same set of input data and are not applied in a cascaded manner. This independence allows for modular implementation and flexible adaptation of the correction algorithms.

In essence, the $f_{on}$ and $f_{off}$ taps of the digital filter that are calculated post-carrier recovery can be applied to at least partially mitigate linear impairments as well as nonlinear impairments, such as OSC-induced impairments. Linear impairments may include residual (untracked) constellation errors that remain after carrier recovery. As such residual constellation errors manifest as a spinning of the constellation after carrier recovery, the central or zero on-axis tap $\tau = 0$ term advantageously tracks such spinning, which allows for at least partial de-rotation of such spinning and thus at least partial compensation of the residual constellation errors in a linear channel.

Using a $2 \times 2$ filter coefficient of the form

$$\begin{pmatrix} \tilde{e}_X'(t) \\ \tilde{e}_Y'(t) \end{pmatrix} = \begin{pmatrix} f_{on} & f_{off} \\ -f_{off}^* & f_{on} \end{pmatrix} \begin{pmatrix} \hat{s}_X(t) \\ \hat{s}_Y(t) \end{pmatrix}$$

where both $f_{on}$ and $f_{off}$ are possibly complex-valued, allows the coefficients $f_{on}$ and $f_{off}$ to be averaged over both polarizations, which improves the estimate in a noisy channel with high decision error rate, and significantly reduces hardware complexity. Since this compensation may be carried out within the receiver's DSP (e.g., in an ASIC), OSC tolerance/robustness can be improved without requiring physical modification of the deployed line system. Indeed, embodiments described herein provide for low complexity tracking of nonlinear phase noise following carrier recovery, which is suitable for coherent pluggables-i.e., modular optical transceivers that can be inserted into a network device, such as a router or switch, to facilitate optical communications.

As described above, the calculations of the on-axis and off-axis contribution terms or correction factors $f_{on}$ and $f_{off}$ can be made in conjunction with those in the above-mentioned EEPN tracker algorithm, and all of the calculated terms can be used to variously mitigate linear and nonlinear impairments. That is, calculations and use of the on-axis and off-axis contribution terms $f_{on}$ and $f_{off}$ can be implemented as a low-complexity extension of the above-mentioned EEPN tracker system. In the context of **FIG. 3A,** the calculations and use of the additional on-axis and off-axis contribution terms $f_{on}$ and $f_{off}$ can be embedded in the filter calculation block 250n and the filter 250r.

Again, it is to be understood and appreciated that the on-axis and off-axis contribution terms $f_{on}$ and $f_{off}$ can alternatively be implemented in isolation. That is, in certain alternate embodiments, the on-axis and off-axis contribution terms $f_{on}$ and $f_{off}$ can be calculated in a standalone algorithm, and these calculated terms can be used independent of, or even without use of, the above-mentioned EEPN tracker. In these embodiments, the filter calculation block 250n and the filter 250r in the circuit of **FIG. 3A** can implement just the calculations and use of the on-axis and off-axis contribution terms $f_{on}$ and $f_{off}$.

In some embodiments, the on-axis correction term ($f_{on}$) used in the filter matrix may be restricted to being a purely imaginary value (i.e., with no real value component), rather than being a more general complex value. This approach reduces the overall complexity of the algorithm while restricting the on-axis zero tap to exclusively address phase noise.

**FIGs. 3B to 3D** each shows a comparison of the simulated performance of an example optical communication system using the above-mentioned EEPN tracker algorithm alone versus with the addition of the on-axis and off-axis contribution terms $f_{on}$ and $f_{off}$, over a given distance and type of fiber. The simulations considered an OSC at 1516 nm and a data channel at 1528.3 nm.

Referring to **FIG. 3B,** the simulation was made with a high net dispersion system over 3200 km (40 spans) of Non-Dispersion-Shifted Fiber (NDSF). As illustrated, the above-mentioned EEPN tracker improved the RSNR by approximately 1.2 dB at +1 dBm OSC power, with the addition of the on-axis and off-axis contribution terms $f_{on}$ and $f_{off}$ providing a further 0.2 dB of improvement. This scenario reflects deployments where the impact of OSCs is less pronounced.

**FIG. 3C** shows results for 1600 km (20 spans) of a Non-Zero Dispersion Shifted Fiber (NZDSF), with approximately 4.5 ps/nm/km dispersion at 1550 nm and an effective area of 52 $\mu m^2$, making it more susceptible to nonlinear effects from high-power OSCs. Here, the above-mentioned EEPN tracker improved RSNR by approximately 0.5 dB, and where the addition of the on-axis and off-axis contribution terms $f_{on}$ and $f_{off}$ provided an additional 0.3 dB of improvement.

**FIG. 3D** shows results for 1360 km (17 spans) of a second variety NZDSF, with 2.5 ps/nm/km dispersion at 1550 nm and an effective area of 52 $\mu m^2$, making it even more susceptible to nonlinear effects from high-power OSCs. Here, the above-mentioned EEPN tracker provides only a modest 0.1 dB improvement, while the addition of the on-axis and off-axis contribution terms $f_{on}$ and $f_{off}$ provided an additional 0.3 dB of improvement, demonstrating the effectiveness of the on-axis and off-axis contribution terms in highly nonlinear conditions.

From **FIGs. 3B** to **3D,** one would readily recognize that the benefit of the on-axis and off-axis contribution terms may be application-dependent, with greater improvements observed in scenarios involving older, lower-dispersion fibers where nonlinear impairments are more severe.

**FIG. 3E** shows nonlinear propagation simulation results for a high net dispersion system that includes 3200 km (40 spans) of NDSF fiber. The results highlight the linear and nonlinear noise quietening of the above-described EEPN filter with the addition of the on-axis zero tap in the simulated system for a range of optical channel powers. The results show approximately a 25 dB to 26 dB quietening of the EEPN, and a power dependent nonlinear noise quietening ranging from 29.5 dB to 23.5 dB for optical channel powers of 2.5 dBm and 5.5 dBm, respectively. Both effects are likely from the above-described EEPN filter. The results also show approximately a 25.5 dB quietening of the linear noise due to the on-axis zero tap's ability to track residual phase error after carrier recovery. The total noise quietening of the enhanced EEPN filter is also shown. No OSCs were present in this simulation, nor was the off-axis zero tap.

**FIG. 3F** shows additional nonlinear propagation simulation results for a high net dispersion system that includes 3200 km (40 spans) of NDSF fiber. The results highlight the linear and nonlinear noise quietening of the above-described EEPN filter with the addition of the off-axis zero tap in the simulated system for a range of optical channel powers. The results show approximately a 25 dB to 26 dB quietening of the EEPN, and a power dependent nonlinear noise quietening ranging from 29.5 dB to 23.5 dB for optical channel powers of 2.5 dBm and 5.5 dBm, respectively. Both effects are likely from the above-described EEPN filter. The results also show a power dependent quietening of both the linear and nonlinear noise ranging from 34 dB to 29.5 dB for 2.5 dBm and 5.5 dBm, respectively, in the system due to the presence of the off-axis zero tap. This noise quietening is primarily due to a reduction in nonlinear XPolM noise. The total noise quietening of the enhanced EEPN filter is also shown. No OSCs were present in this simulation, nor was the on-axis zero tap.

**FIG. 4C** depicts an illustrative embodiment of a method 430 in accordance with various aspects described herein.

At 430a, the method can include generating an error estimate based on information from a carrier phase recovery system that digitally recovers a carrier phase associated with a signal of a first polarization. For example, the time domain EEPN tracker circuit 250' may, similar to that described above with respect to on-axis/off-axis tap derivations/implementations, perform one or more operations that include generating an error estimate based on information from a carrier phase recovery system that digitally recovers a carrier phase associated with a signal of a first polarization.

At 430b, the method can include deriving a first filter coefficient based on the error estimate and estimated symbols of the signal, wherein the first filter coefficient is a complex value. For example, the time domain EEPN tracker circuit 250' may, similar to that described above with respect to on-axis/off-axis tap derivations/implementations, perform one or more operations that include deriving a first filter coefficient based on the error estimate and estimated symbols of the signal, wherein the first filter coefficient is a complex value.

At 430c, the method can include deriving a second filter coefficient based on the error estimate and estimated symbols of another signal of a second polarization orthogonal to the first polarization, wherein the second filter coefficient is a complex value. For example, the time domain EEPN tracker circuit 250' may, similar to that described above with respect to on-axis/off-axis tap derivations/implementations, perform one or more operations that include deriving a second filter coefficient based on the error estimate and estimated symbols of another signal of a second polarization orthogonal to the first polarization, wherein the second filter coefficient is a complex value.

At 430d, the method can include using the first filter coefficient and the second filter coefficient to at least partially compensate for impairments relating to the signal. For example, the time domain EEPN tracker circuit 250' may, similar to that described above with respect to on-axis/off-axis tap derivations/implementations, perform one or more operations that include using the first filter coefficient and the second filter coefficient to at least partially compensate for impairments relating to the signal.

In various embodiments, threshold(s) may be utilized as part of determining/identifying one or more actions to be taken or engaged. The threshold(s) may be adaptive based on an occurrence of one or more events or satisfaction of one or more conditions (or, analogously, in an absence of an occurrence of one or more events or in an absence of satisfaction of one or more conditions).

The terms "first," "second," "third," and so forth, as used in the claims, unless otherwise clear by context, is for clarity only and does not otherwise indicate or imply any order in time. For instance, "a first determination," "a second determination," and "a third determination," does not indicate or imply that the first determination is to be made before the second determination, or vice versa, etc. Furthermore, the use of the term approximating or approximation herein can include or involve satisfying particular thresholds in whole or in part.

In the subject specification, terms such as "store," "storage," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can comprise both volatile and nonvolatile memory, by way of illustration, and not limitation, volatile memory, non-volatile memory, disk storage, and memory storage. Further, nonvolatile memory can be included in read only memory (ROM), programmable ROM (PROM), electrically programmable ROM (EPROM), electrically erasable ROM (EEPROM), or flash memory. Volatile memory can comprise random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

As used in some contexts in this application, in some embodiments, the terms "component," "system" and the like are intended to refer to, or comprise, a computerrelated entity or an entity related to an operational apparatus with one or more specific functionalities, wherein the entity can be either hardware, a combination of hardware and software, software, or software in execution. As an example, a component may be, but is not limited to being, a process running on a processor, a processor, an object, an executable, a thread of execution, computer-executable instructions, a program, and/or a computer. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments. Additionally, functions described as being performed by one component or system may be performed by multiple components or systems, or functions described as being performed by multiple components or systems may be performed by a single component or system, without departing from example embodiments.

Further, the various embodiments can be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable device or computer-readable storage/communications media. For example, computer readable storage media can include, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

In addition, the words "example" and "exemplary" are used herein to mean serving as an instance or illustration. Any embodiment or design described herein as "example" or "exemplary" is not necessarily to be construed as preferred or advantageous over other embodiments or designs. Rather, use of the word example or exemplary is intended to present concepts in a concrete fashion. As used in this application, the term "or" is intended to mean an inclusive "or" rather than an exclusive "or". That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

What has been described above includes mere examples of various embodiments. It is, of course, not possible to describe every conceivable combination of components or methodologies for purposes of describing these examples, but one of ordinary skill in the art can recognize that many further combinations and permutations of the present embodiments are possible. Accordingly, the embodiments disclosed and/or claimed herein are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

In addition, a flow diagram may include a "start" and/or "continue" indication. The "start" and "continue" indications reflect that the steps presented can optionally be incorporated in or otherwise used in conjunction with other routines. In this context, "start" indicates the beginning of the first step presented and may be preceded by other activities not specifically shown. Further, the "continue" indication reflects that the steps presented may be performed multiple times and/or may be succeeded by other activities not specifically shown. Further, while a flow diagram indicates a particular ordering of steps, other orderings are likewise possible provided that the principles of causality are maintained.

As may also be used herein, the term(s) "operably coupled to", "coupled to", and/or "coupling" includes direct coupling between items and/or indirect coupling between items via one or more intervening items. Such items and intervening items include, but are not limited to, junctions, communication paths, components, circuit elements, circuits, functional blocks, and/or devices. As an example of indirect coupling, a signal conveyed from a first item to a second item may be modified by one or more intervening items by modifying the form, nature or format of information in a signal, while one or more elements of the information in the signal are nevertheless conveyed in a manner than can be recognized by the second item. In a further example of indirect coupling, an action in a first item can cause a reaction on the second item, as a result of actions and/or reactions in one or more intervening items.

Although specific embodiments have been illustrated and described herein, it should be appreciated that any arrangement which achieves the same or similar purpose may be substituted for the embodiments described or shown by the subject disclosure. The subject disclosure is intended to cover any and all adaptations or variations of various embodiments. Combinations of the above embodiments, and other embodiments not specifically described herein, can be used in the subject disclosure. For instance, one or more features from one or more embodiments can be combined with one or more features of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized. It is also to be understood and appreciated that the subject matter in one or more dependent claims may be combined with that in one or more other dependent claims.

The following are descriptions of various embodiments described herein, listed as items.

A1. A coherent optical receiver, comprising:
an equalization enhanced phase noise (EEPN) compensation system that is configured to perform operations, including

calculating at least one metric based on information that is downstream of a chromatic dispersion compensation system that digitally compensates for chromatic dispersion relating to a signal, and
utilizing the at least one metric to perform EEPN compensation relating to the signal upstream of a carrier phase recovery system that digitally recovers a carrier phase associated with the signal.

A2. The coherent optical receiver of item A1, wherein the at least one metric is a scalar.

A3. The coherent optical receiver of item A1, wherein the at least one metric is related to clock phase.

A4. The coherent optical receiver of item A1, wherein the calculating involves one or more clock phase detection operations.

A5. The coherent optical receiver of item A1, wherein the calculating involves frequency domain operations.

A6. The coherent optical receiver of item A1, wherein the calculating involves time domain operations.

A7. The coherent optical receiver of item A1, wherein the calculating involves use of known received symbols.

A8. The coherent optical receiver of item A1, wherein the EEPN compensation comprises an estimation of a receiver (Rx) or transmitter (Tx) laser phase noise at a first frequency relative to a second frequency.

A9. The coherent optical receiver of item A1, wherein the EEPN compensation comprises a compensation operation for a receiver (Rx) or transmitter (Rx) laser phase noise at a first frequency relative to a second frequency.

A10. The coherent optical receiver of item A1, wherein the at least one metric is a vector.

All. The coherent optical receiver of item A1, wherein the signal comprises N frequency division multiplexing (FDM) streams.

A12. The coherent optical receiver of item A11, wherein the at least one metric has a length equal to N or 2N.

A13. The coherent optical receiver of item A1, wherein the at least one metric comprises distinct elements that correspond to frequency division multiplexing (FDM) streams that are arranged across a plurality of positive frequencies or a plurality of negative frequencies.

A14. A method, comprising:

calculating, by an equalization enhanced phase noise (EEPN) compensation system of a coherent optical receiver, at least one metric,

wherein the coherent optical receiver includes a chromatic dispersion compensation system configured to digitally compensate for chromatic dispersion relating to a signal, and a carrier phase recovery system configured to digitally recover a carrier phase associated with the signal, and
wherein the calculating is based on information that is downstream of the chromatic dispersion compensation system; and

utilizing, by the EEPN compensation system, the at least one metric to perform EEPN compensation relating to the signal upstream of the carrier phase recovery system.

A15. The method of item A14, wherein the at least one metric is a scalar.

A16. The method of item A14, wherein the at least one metric is related to clock phase.

A17. The method of item A14, wherein the at least one metric comprises a vector.

A18. The method of item A14, wherein the calculating involves one or more clock phase detection operations.

A19. The method of item A14, wherein the calculating involves frequency domain operations.

A20. A non-transitory machine-readable medium, comprising executable instructions that, when executed by a processing system of a coherent optical receiver including a processor, facilitate performance of operations, the operations comprising:

calculating at least one metric,

wherein the coherent optical receiver includes a chromatic dispersion compensation system configured to digitally compensate for chromatic dispersion relating to a signal, and a carrier phase recovery system configured to digitally recover a carrier phase associated with the signal, and
wherein the calculating is based on information that is downstream of the chromatic dispersion compensation system; and

utilizing the at least one metric to perform edgeless EEPN compensation relating to the signal upstream of the carrier phase recovery system.

B1. A coherent optical receiver, comprising:

a decoder configured to generate an error estimate based on information from a carrier phase recovery system that digitally recovers a carrier phase associated with a signal; and
an equalization enhanced phase noise (EEPN) compensation system configured to perform operations, including

deriving filter coefficients based on the error estimate, and

using the filter coefficients in an EEPN filter to perform EEPN compensation relating to the signal, wherein a correlation time of at least one of the filter coefficients is substantially equal to a relative delay associated with digital compensation of chromatic dispersion relating to the signal.

B2. The coherent optical receiver of item B1, wherein the EEPN compensation results in a compensated signal that is provided to another decoder for decoding.

B3. The coherent optical receiver of item B1, wherein the EEPN filter comprises a feed-forward finite impulse response (FIR) filter.

B4. The coherent optical receiver of item B3, wherein the at least one of the filter coefficients comprises a tap weight of the feed-forward FIR filter, and wherein the correlation time comprises a 50% autocorrelation time of the tap weight.

B5. The coherent optical receiver of item B3, wherein the feed-forward FIR filter comprises two positive-time taps and two negative-time taps that are minus conjugates of respective ones of the two positive-time taps.

B6. The coherent optical receiver of item B3, wherein the feed-forward FIR filter is applied over a sequence of transmitted symbol estimates.

B7. The coherent optical receiver of item B3, wherein the feed-forward FIR filter is applied over a sequence of received symbols.

B8. The coherent optical receiver of item B1, wherein the deriving involves cross-correlation of the error estimate with neighboring received samples.

B9. The coherent optical receiver of item B1, wherein the deriving involves cross-correlation of the error estimate with estimates of transmitted symbols corresponding to neighboring received samples.

B10. The coherent optical receiver of item B1, wherein the relative delay comprises a delay difference between digital compensation of chromatic dispersion relating to components of the signal that are closer to a first frequency and digital compensation of chromatic dispersion relating to components of the signal that are closer to a second frequency.

B11. The coherent optical receiver of item B1, wherein the relative delay is between 0.5 and 2 ns.

B12. The coherent optical receiver of item B1, wherein the relative delay is between 2 and 8 ns.

B13. The coherent optical receiver of item B1, wherein the relative delay is between 8 and 32 ns.

B14. The coherent optical receiver of item B1, wherein the correlation time is within a factor of two of the relative delay.

B15. The coherent optical receiver of item B1, wherein the correlation time is substantially equal to a width of an impulse response of a filter corresponding to the digital compensation of chromatic dispersion.

B16. The coherent optical receiver of item B1, wherein the deriving involves a filtered cross-correlation operation.

B17. The coherent optical receiver of item B1, wherein at least another one of the filter coefficients relates to filtering for a transmitter (Tx) impairment, and wherein a correlation time of the at least another one of the filter coefficients is at least 1000 times greater than the correlation time of the at least one of the filter coefficients.

B18. The coherent optical receiver of item B1, wherein the operations further include:

deriving another filter coefficient based on the error estimate and estimated symbols of the signal, wherein the other filter coefficient is a complex value, and
using the other filter coefficient in a digital filter to at least partially compensate for one or more impairments relating to the signal.

B19. A method, comprising:

generating, by a processing system including a processor, an error estimate based on information from a carrier phase recovery system that digitally recovers a carrier phase associated with a signal;
deriving, by the processing system, filter coefficients based on the error estimate; and
using, by the processing system, the filter coefficients to perform equalization enhanced phase noise (EEPN) compensation relating to the signal, wherein a correlation time of at least one of the filter coefficients is substantially equal to a relative delay associated with digital compensation of chromatic dispersion relating to the signal.

B20. The method of item B19, wherein the processing system comprises a feed-forward finite impulse response (FIR) filter.

B21. A non-transitory machine-readable medium, comprising executable instructions that, when executed by a processing system of a device including a processor, facilitate performance of operations, the operations comprising:

generating an error estimate based on information from a carrier phase recovery system that digitally recovers a carrier phase associated with a signal;
deriving filter coefficients based on the error estimate; and
using the filter coefficients to perform equalization enhanced phase noise (EEPN) compensation relating to the signal, wherein a correlation time of at least one of the filter coefficients is substantially equal to a relative delay associated with digital compensation of chromatic dispersion relating to the signal.

C1. A coherent optical receiver, comprising:

a decoder configured to generate an error estimate based on information from a carrier phase recovery system that digitally recovers a carrier phase associated with a signal; and
an impairment compensation system configured to perform operations, including
deriving a filter coefficient based on the error estimate and estimated
symbols of the signal, wherein the filter coefficient is a complex value, and
using the filter coefficient in a digital filter to at least partially compensate
for one or more impairments relating to the signal.

C2. The coherent optical receiver of item C1, wherein the one or more impairments comprise one or more linear impairments.

C3. The coherent optical receiver of item C2, wherein the one or more linear impairments comprise residual phase noise in the signal after recovery of the carrier phase.

C4. The coherent optical receiver of item C1, wherein the one or more impairments comprise one or more nonlinear impairments.

C5. The coherent optical receiver of item C4, wherein the one or more nonlinear impairments comprise Optical Service Channel (OSC)-induced cross-phase modulation (XPM).

C6. The coherent optical receiver of item C1, wherein the deriving the filter coefficient comprises calculating a single on-axis zero tap weight.

C7. The coherent optical receiver of item C1, wherein the signal is of a first polarization, and wherein the operations further include

deriving another filter coefficient based on the error estimate and estimated symbols of another signal that is of a second polarization orthogonal to the first polarization, wherein the other filter coefficient is a complex value, and
using the other filter coefficient to at least partially compensate for one or more additional impairments relating to the signal.

C8. The coherent optical receiver of item C7, wherein the one or more additional impairments comprise Optical Service Channel (OSC)-induced cross-polarization modulation (XPolM) between the signal and the other signal.

C9. The coherent optical receiver of item C7, wherein the deriving the other filter coefficient comprises calculating a single off-axis zero tap weight.

C10. The coherent optical receiver of item C7, wherein the deriving the other filter coefficient involves conjugate-symmetric pairs, including cross-correlation of the error estimate with a conjugate of an estimated transmitted symbol associated with the other signal and cross-correlation of a conjugate of another error estimate with an estimated transmitted symbol associated with the signal.

C11. The coherent optical receiver of item C7, wherein the using the filter coefficient and the using the other filter coefficient involves a 2 x 2 coefficient matrix that is formed based on the filter coefficient and the other filter coefficient.

C12. The coherent optical receiver of item C1, wherein the operations further include

deriving additional filter coefficients based on the error estimate, and
using the additional filter coefficients to at least partially compensate for equalization enhanced phase noise (EEPN) relating to the signal.

C13. The coherent optical receiver of item C12, wherein a correlation time of at least one of the additional filter coefficients is substantially equal to a relative delay associated with digital compensation of chromatic dispersion relating to the signal.

C14. The coherent optical receiver of item C1, wherein the using of the filter coefficient results in a compensated signal that is provided to another decoder for decoding.

C15. The coherent optical receiver of item C1, wherein the digital filter comprises a feed-forward finite impulse response (FIR) filter.

C16. The coherent optical receiver of item C15, wherein the feed-forward FIR filter is applied over a sequence of transmitted symbol estimates.

C17. The coherent optical receiver of item C15, wherein the feed-forward FIR filter is applied over a sequence of received symbols.

C18. A method, comprising:

generating, by a processing system including a processor, an error estimate based on information from a carrier phase recovery system that digitally recovers a carrier phase associated with a signal of a first polarization;
deriving, by the processing system, a first filter coefficient based on the error estimate and estimated symbols of the signal, wherein the first filter coefficient is a complex value;
deriving, by the processing system, a second filter coefficient based on the error estimate and estimated symbols of another signal of a second polarization orthogonal to the first polarization, wherein the second filter coefficient is a complex value; and
using, by the processing system, the first filter coefficient and the second filter coefficient to at least partially compensate for impairments relating to the signal.

C19. The method of item C18, wherein the impairments comprise linear impairments, nonlinear impairments, or a combination thereof.

C20. A circuit configured to:

generate a first error estimate based on first information from a carrier phase recovery system relating to a first signal of a first polarization, and a second error estimate based on second information from the carrier phase recovery system relating to a second signal of a second polarization orthogonal to the first polarization;
derive a first filter coefficient based on the first error estimate, estimated symbols of the first signal, the second error estimate, and estimated symbols of the second signal, wherein the first filter coefficient is a complex value;
derive a second filter coefficient based on the first error estimate, the estimated symbols of the first signal, the second error estimate, and the estimated symbols of the second signal, wherein the second filter coefficient is a complex value; and
use the first filter coefficient and the second filter coefficient to at least partially compensate for impairments relating to the first signal and the second signal.

**Claims**

1. A coherent optical receiver, comprising:

   a decoder (250f) configured to generate an error estimate based on information from a carrier phase recovery system that digitally recovers a carrier phase associated with a signal; and
   an equalization enhanced phase noise, EEPN, compensation system configured to perform operations, including

   deriving filter coefficients based on the error estimate, and
   using the filter coefficients in an EEPN filter to perform EEPN compensation relating to the signal, wherein a correlation time of at least one of the filter coefficients is substantially equal to a relative delay associated with digital compensation of chromatic dispersion relating to the signal.

2. The coherent optical receiver of claim 1, wherein the EEPN compensation results in a compensated signal that is provided to another decoder for decoding.

3. The coherent optical receiver of claim 1, wherein the EEPN filter comprises a feed-forward finite impulse response, FIR, filter.

4. The coherent optical receiver of claim 3, wherein the at least one of the filter coefficients comprises a tap weight of the feed-forward FIR filter, and wherein the correlation time comprises a 50% autocorrelation time of the tap weight.

5. The coherent optical receiver of claim 3, wherein the feed-forward FIR filter comprises two positive-time taps and two negative-time taps that are minus conjugates of respective ones of the two positive-time taps.

6. The coherent optical receiver of claim 3, wherein the feed-forward FIR filter is applied over a sequence of transmitted symbol estimates.

7. The coherent optical receiver of claim 3, wherein the feed-forward FIR filter is applied over a sequence of received symbols.

8. The coherent optical receiver of claim 1, wherein the deriving involves cross-correlation of the error estimate with neighboring received samples.

9. The coherent optical receiver of claim 1, wherein the deriving involves cross-correlation of the error estimate with estimates of transmitted symbols corresponding to neighboring received samples.

10. The coherent optical receiver of claim 1, wherein the relative delay comprises a delay difference between digital compensation of chromatic dispersion relating to components of the signal that are closer to a first frequency and digital compensation of chromatic dispersion relating to components of the signal that are closer to a second frequency.

11. The coherent optical receiver of claim 1, wherein the relative delay is between 0.5 ns and 2 ns, or wherein the relative delay is between 2 ns and 8 ns, or wherein the relative delay is between 8 ns and 32 ns.

12. The coherent optical receiver of claim 1, wherein the correlation time is within a factor of two of the relative delay.

13. The coherent optical receiver of claim 1, wherein the correlation time is substantially equal to a width of an impulse response of a filter corresponding to the digital compensation of chromatic dispersion.

14. The coherent optical receiver of claim 1, wherein the operations further include:

    deriving another filter coefficient based on the error estimate and estimated symbols of the signal, wherein the other filter coefficient is a complex value, and
    using the other filter coefficient in a digital filter to at least partially compensate for one or more impairments relating to the signal.

15. A method, comprising:

generating, by a processing system including a processor, an error estimate based on information from a carrier phase recovery system that digitally recovers a carrier phase associated with a signal;
deriving, by the processing system, filter coefficients based on the error estimate; and

using, by the processing system, the filter coefficients to perform equalization enhanced phase noise, EEPN, compensation relating to the signal, wherein a correlation time of at least one of the filter coefficients is substantially equal to a relative delay associated with digital compensation of chromatic dispersion relating to the signal.

**FIG. 1A**

EP 4 776 530 A1

FIG. 1B

43

**FIG. 1C**

FIG. 2

250

**FIG. 3A**

EP 4 776 530 A1

**240GB 1200Gbps, 3200 km NDSF**

**FIG. 3B**

**240GB 1200Gbps, 1600 km NZDSF**

FIG. 3C

**240GB 1200Gbps, 1360 km NZDSF**

**FIG. 3D**

120GB 600Gbps, 3200km NDSF, on-axis zero tap

**FIG. 3E**

EP 4 776 530 A1

**FIG. 3F**

CALCULATING, BY AN EEPN COMPENSATION SYSTEM OF A COHERENT OPTICAL RECEIVER, AT LEAST ONE METRIC, WHEREIN THE COHERENT OPTICAL RECEIVER INCLUDES A CHROMATIC DISPERSION COMPENSATION SYSTEM CONFIGURED TO DIGITALLY COMPENSATE FOR CHROMATIC DISPERSION RELATING TO A SIGNAL, AND A CARRIER PHASE RECOVERY SYSTEM CONFIGURED TO DIGITALLY RECOVER A CARRIER PHASE ASSOCIATED WITH THE SIGNAL, AND WHEREIN THE CALCULATING IS BASED ON INFORMATION THAT IS DOWNSTREAM OF THE CHROMATIC DISPERSION COMPENSATION SYSTEM — 410a

UTILIZING, BY THE EEPN COMPENSATION SYSTEM, THE AT LEAST ONE METRIC TO PERFORM EEPN COMPENSATION RELATING TO THE SIGNAL UPSTREAM OF THE CARRIER PHASE RECOVERY SYSTEM — 410b

410

# FIG. 4A

EP 4 776 530 A1

GENERATING AN ERROR ESTIMATE BASED ON INFORMATION FROM A CARRIER PHASE RECOVERY SYSTEM THAT DIGITALLY RECOVERS A CARRIER PHASE ASSOCIATED WITH A SIGNAL — 420a

DERIVING FILTER COEFFICIENTS BASED ON THE ERROR ESTIMATE — 420b

USING THE FILTER COEFFICIENTS TO PERFORM EEPN COMPENSATION RELATING TO THE SIGNAL, WHEREIN A CORRELATION TIME OF AT LEAST ONE OF THE FILTER COEFFICIENTS IS SUBSTANTIALLY EQUAL TO A RELATIVE DELAY ASSOCIATED WITH DIGITAL COMPENSATION OF CHROMATIC DISPERSION RELATING TO THE SIGNAL — 420c

420

# FIG. 4B

53

GENERATE A FIRST ERROR ESTIMATE BASED ON FIRST INFORMATION FROM A CARRIER PHASE RECOVERY SYSTEM RELATING TO A FIRST SIGNAL OF A FIRST POLARIZATION, AND A SECOND ERROR ESTIMATE BASED ON SECOND INFORMATION FROM THE CARRIER PHASE RECOVERY SYSTEM RELATING TO A SECOND SIGNAL OF A SECOND POLARIZATION ORTHOGONAL TO THE FIRST POLARIZATION — 430a

DERIVE A FIRST FILTER COEFFICIENT BASED ON THE FIRST ERROR ESTIMATE, ESTIMATED SYMBOLS OF THE FIRST SIGNAL, THE SECOND ERROR ESTIMATE, AND ESTIMATED SYMBOLS OF THE SECOND SIGNAL, WHEREIN THE FIRST FILTER COEFFICIENT IS A COMPLEX VALUE — 430b

DERIVE A SECOND FILTER COEFFICIENT BASED ON THE FIRST ERROR ESTIMATE, THE ESTIMATED SYMBOLS OF THE FIRST SIGNAL, THE SECOND ERROR ESTIMATE, AND THE ESTIMATED SYMBOLS OF THE SECOND SIGNAL, WHEREIN THE SECOND FILTER COEFFICIENT IS A COMPLEX VALUE — 430c

USE THE FIRST FILTER COEFFICIENT AND THE SECOND FILTER COEFFICIENT TO AT LEAST PARTIALLY COMPENSATE FOR IMPAIRMENTS RELATING TO THE FIRST SIGNAL AND THE SECOND SIGNAL — 430d

430

# FIG. 4C

**FIG. 5**

**EUROPEAN SEARCH REPORT**

Application Number

EP 26 15 1105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | JUNG SEBASTIAN ET AL: "On Second-Stage Timing Recovery for Equalization-Enhanced Phase Noise Mitigation", 2025 OPTICAL FIBER COMMUNICATIONS CONFERENCE AND EXHIBITION (OFC) OPTICA, 30 March 2025 (2025-03-30), pages 1-3, XP034957321, DOI: 10.1364/OFC.2025.M2E.5 [retrieved on 2025-07-04] * the whole document * | 1-15 | INV. H04B10/61 |
| A | DATABASE INSPEC [Online] THE INSTITUTION OF ELECTRICAL ENGINEERS, STEVENAGE, GB; 2024, JUNG S ET AL: "Mitigating Equalization-Enhanced Phase Noise Using Adaptive Post Equalization", XP002821976, Database accession no. 27204564 * the whole document * & 50TH EUROPEAN CONFERENCE ON OPTICAL COMMUNICATION, 2024, pages 942-945, ECOC 2024; 50th European Conference on Optical Communication VDE VERLAG Berlin, Germany ISBN: 978-3-8007-6426-6 | 1-15 | TECHNICAL FIELDS SEARCHED (IPC)<br><br>H04B |

The present search report has been drawn up for all claims

| Place of search | Date of completion of the search | Examiner |
|---|---|---|
| Munich | 27 May 2026 | Petitit, Nicolas |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 01472325 A
- US 17911825 A
- US 27776725 A
- US 63745833
- US 47449523 A
- US 7200339 B
- US 7627252 B
- US 7606498 B
- US 11126219 B
- US 11038599 B

**Non-patent literature cited in the description**

- **A. KAKKAR et al.** Comprehensive Study of Equalization-Enhanced Phase Noise in Coherent Optical Systems. *Journal of Lightwave Technology*, 01 December 2015, vol. 33 (23), 4834-4841
- **E. IP** ; **J. M. KAHN**. Fiber Impairment Compensation Using Coherent Detection and Digital Signal Processing. *Journal of Lightwave Technology*, 2010, vol. 28 (4), 502-519
- **A. ABOLFATHIMOMTAZ et al.** Equalization-Enhanced Phase Noise Compensation in Coherent Fiber Receivers. *Journal of Lightwave Technology*, 15 October 2024, vol. 42 (20), 7155-7166
- **NEVES et al.** Enhanced Phase Estimation for Long-Haul Multi-Carrier Systems Using a Dual-Reference Subcarrier Approach. *Journal of Lightwave Technology*, 01 May 2021, vol. 39 (9), 2714-2724
- **G. JACOBSEN et al.** Study of EEPN mitigation using modified RF pilot and Viterbi-Viterbi based phase noise compensation. *Optics Express*, 2013
- **X. ZHOU**. *IEEE Signal Processing Magazine*, March 2014, vol. 31 (2), 35-45
- **M. QIU et al.** Mitigation of Equalization Enhanced Phase Noise Using Feed-forward Timing Error Correction. *ECOC*, 2024
- **S. JUNG et al.** Mitigating Equalization-Enhanced Phase Noise Using Adaptive Post Equalization. *ECOC*, 2024
- **T. WILLIAMS**. 1600ZR+ EEPN Considerations. *OIF November*, 07 May 2024
- **C. A. BELFIORE** ; **J. H. PARK**. Decision feedback equalization. *Proceedings of the IEEE*, August 1979, vol. 67 (8), 1143-1156
- **ELLIOTT, STEPHEN J.** ; **TREVOR J. SUTTON**. Performance of feedforward and feedback systems for active control. *IEEE Transactions on Speech and Audio Processing*, 1996, vol. 4 (3), 214-223
- **L. LI**. Nonlinear polarization crosstalk canceller for dual-polarization digital coherent receivers. *proc. OFC 2010, OWE3*, 2010
- **EZRA IP et al.** Coherent detection in optical fiber systems. *Optics Express*, 21 January 2008, vol. 16 (2)